# EUROPÄISCHE PATENTSCHRIFT

(11) **EP 3 333 361 B1**
(45) Veröffentlichungstag und Bekanntmachung des Hinweises auf die Patenterteilung: **15.05.2019**
(21) Anmeldenummer: 17205743.2
(22) Anmeldetag: 06.12.2017
(51) Int. Cl.: B24B 7/16, B24B 23/02, B24B 23/08, B24B 27/00, E01C 23/088, B23C 3/00, B23C 3/02, B23C 3/12, B28D 1/18, E21C 35/18, E21C 35/197

(54) **VERFAHREN ZUR INSTANDSETZUNG EINER FRÄSWALZE EINER STRASSENFRÄSE, VORRICHTUNG ZUR SPANENDEN BEARBEITUNG VON VERSCHLEISSBELASTETEN MEISSELKOPFNÄHEREN ENDBEREICHEN VON MEISSELHALTERN VON STRASSENFRÄSEN UND VERWENDUNG DIESER VORRICHTUNG ZUR INSTANDSETZUNG EINES VERSCHLEISSBELASTETEN MEISSELKOPFNÄHEREN ENDBEREICHS EINES MEISSELHALTERS**
METHOD FOR MAINTAINING A MILLING DRUM OF A ROAD MILL, DEVICE FOR MILLING MACHINING OF WORN BIT HOLDERS OF ROAD MILLS AND USE OF THIS DEVICE FOR MAINTENANCE OF A WORN BIT HOLDER
PROCÉDÉ DE MAINTENANCE D'UN TAMBOUR DE FRAISAGE D'UNE FRAISEUSE, DISPOSITIF D'USINAGE PAR ENLÈVEMENT DE COPEAUX DE PORTE-BURINS USÉ POUR FRAISEUSES ET UTILISATION DE CE DISPOSITIF POUR LA MAINTENANCE D'UN PORTE-BURIN USÉ

(30) Priorität: 09.12.2016 DE 102016224606
(43) Veröffentlichungstag der Anmeldung: 13.06.2018
(73) Patentinhaber: Wirtgen GmbH, 53578 Windhagen (DE)
(72) Erfinder: Abresch, Stefan, 56269 Dierdorf (DE); Lehnert, Thomas, 56587 Oberraden (DE); Reindorf, Markus, 53567 Buchholz (DE); Barimani, Cyrus, 53639 Königswinter (DE)
(74) Vertreter: Ruttensperger Lachnit Trossin Gomoll

(56) Entgegenhaltungen:
- DE-A1- 2 143 055
- DE-A1- 10 330 854
- DE-A1-102013 112 973
- US-A- 2 869 293
- US-A- 3 134 202
- US-A- 3 142 139
- US-A- 4 934 109
- US-A1- 2012 073 132
- US-B1- 7 082 656
- US-B1- 7 103 950

## Beschreibung

Die vorliegende Erfindung betrifft ein Verfahren zur Instandsetzung einer Fräswalze einer Straßenfräse mit einer Mehrzahl von Meißelhaltern, welche jeweils dazu ausgebildet sind, einen sich längs einer Schaftachse erstreckenden Fräsmeißelschaft eines Fräsmeißels, der den Fräsmeißelschaft und einen mit diesem verbundenen Meißelkopf mit Meißelspitze aufweist, in einer sich längs einer Aufnahmeachse erstreckenden Meißelaufnahmeöffnung aufzunehmen, wobei wenigstens ein Teil der Meißelhalter jeweils einen verschlissenen meißelkopfnäheren Endbereich aufweist, der einen meißelkopfnäheren Endabschnitt der Meißelaufnahmeöffnung umgibt und der eine im Fräsbetrieb dem Meißelkopf zugewandte Endfläche aufweist, wobei das Verfahren die folgenden Schritte umfasst:
- Ermitteln eines meißelhalterbezogenen Verschleißzustands der Fräswalze, und
- Bereitstellen der Fräswalze mit Meißelhaltern, deren jeweilige im Fräsbetrieb dem Meißelkopf zugewandte Endfläche, verglichen mit dem unverschlissenen Zustand der Meißelhalter an jeweils derselben Meißelhalterposition vor Aufnahme des verschleißbegründenden Fräsbetriebs, längs der Aufnahmeachse abhängig von dem ermittelten Verschleißzustand verlagert ist.

Die vorliegende Erfindung betrifft weiter eine Vorrichtung zur spanenden Bearbeitung von verschleißbelasteten meißelkopfnäheren Endbereichen von Meißelhaltern von Straßenfräsen, welche Vorrichtung ausgebildet ist zur Instandsetzung der Fräswalze gemäß dem in der vorliegenden Anmeldung beschriebenen Instandsetzungsverfahren.

Aus der DE 10 2013 112 973 A1 sind ein Verschleißprognoseverfahren und ein Wartungsverfahren für eine Bodenbearbeitungsmaschine, wie etwa eine Straßenfräse, bekannt. Dabei wird der aktuelle Verschleißzustand eines oder mehrerer Bodenbearbeitungswerkzeuge erfasst und aus dem erfassten Verschleißzustand eine Restverschleißkapazität ermittelt, welche das noch verschleißbare Maß der Bodenbearbeitungswerkzeuge bis zum Erreichen der Verschleißgrenze ermittelt.

Erreichen die Bodenbearbeitungswerkzeuge einen bestimmten Verschleißzustand, lehrt die DE 10 2013 112 973 A1 den Austausch des betroffenen Werkzeugs.

Das bekannte Verschleißprognose- und Wartungsverfahren kann außerdem die Informationsübertragung zu einer Wartungsstation mit Wartungspersonal umfassen, sodass Wartungspersonal über die prognostizierte Restverschleißkapazität informiert wird und rechtzeitig vor Erreichen der zugehörigen Verschleißgrenze zum Austausch der dann verschlissenen Werkzeuge ausrückt. Hierdurch kann die Verfügbarkeit einer Bodenbearbeitungsmaschine erhöht werden. Die DE 10 2013 112 973 A1 offenbart das Verschleißprognose- und Wartungsverfahren ausdrücklich am Beispiel von Meißelhaltern bzw. Meißelwechselhaltern von Straßenfräsen.

Aus der US 2012/0073132 A1 ist eine Vorrichtung zum Entfernen einer um einen Turbinenzapfen umlaufenden Schweißnaht bekannt. Die Vorrichtung wird koaxial drehbar auf den in einen Turbinengrundkörper eingesteckten und daran festgeschweißten Turbinenzapfen aufgesteckt und dann unter radialer Zustellung in Umfangsrichtung um den Turbinenzapfen entlang der zu entfernenden Schweißnaht geführt.

Aus der US 3 142 139 A ist eine Schleifmaschine bekannt, deren Schleifscheiben-Drehwelle mit einem konischen Gewindeteil in ein konisches Innengewinde einer Bohrstange eines Erdbohrgestänges einschraubbar ist. Die Welle ist mit Wälzlagern koaxial zur Schraubachse des konischen Gewindeteils der Schleifmaschine drehbar gelagert.

Auf diese Weise kann eine Schleifscheibe die stirnseitigen Endflächen der Bohrstange mit der Schraubachse des konischen Innengewindes der Bohrstange als Referenzachse plan bearbeiten.

Aus der US 4 934 109 A ist eine Vorrichtung zur spanenden Bearbeitung des kreisförmigen Randes eines Rohrs bekannt. Ein Vorrichtungsgestell wird dabei vollständig in das Rohr eingeführt und über eine Dreipunkt-Lagerung im Inneren des Rohrs gegen dessen Innenwand verspannt.

Von dem Vorrichtungsgestell kragt axial ein mittels Kugelgelenk um zwei zueinander und zur Rohrachse orthogonale Schwenkachsen schwenkbarer Führungszapfen aus, an welchem eine Schleifmaschine über ein weiteres Gestell befestigt ist.

Aus der DE 21 43 055 A ist eine weitere Vorrichtung zum Bearbeiten von Rohren, insbesondere von aus Asbestzement bestehenden Rohren bekannt. Konstruktiv entspricht diese Vorrichtung im Wesentlichen der aus der zuvor genannten US 4 934 109 A bekannten Vorrichtung. Auch hier wird ein Vorrichtungsgestell vollständig in das Innere des zu bearbeitenden Rohrs eingeführt und gegen die Innenwand des Rohrs verspannt. An einem axialen Ausleger des Vorrichtungsgestells ist eine Zerspanvorrichtung angeordnet, welche die spanende Bearbeitung einer Stirnseite des Rohres gestattet.

Aus der US 7 103 950 B1 ist eine Vorrichtung zum Anfasen von Rohren bekannt. Die bekannte Vorrichtung verwendet ein konisches Schneidwerkzeug, wobei der halbe Konuswinkel dem zu erzielenden Fasenwinkel am Rohrende entspricht.

Das konische Werkzeug rotiert um eine Werkzeugachse, welche für den Bearbeitungsvorgang parallel zur Rohrachse orientiert wird. Hierzu ist ein Teil des Werkzeugs von einer Hülse umgeben, deren zur Werkzeugachse orthogonale Stirnfläche teilweise auf die Stirnfläche des zu bearbeitenden Rohrs aufgesetzt und entlang der Stirnfläche geführt wird.

Eine eben solche Vorrichtung ist aus der US 7 082 656 B1 bekannt.

Aus der DE 103 30 854 A1 ist eine Schleifvorrichtung zur Abrundung von Kanten bekannt. Hierzu wird wiederum ein Gestellteil an der Innenwandung eines Rohrs dreh-und verschiebefest verspannt. An einem bezüglich des Gestells zentralen Ort ist über ein Kugelgelenk eine Bearbeitungsvorrichtung geführt, welche radial bezüglich der Achse des zu bearbeitenden Rohrs zu beiden Seiten über das Kugelgelenk hinaus auskragt. An einem Ende weist die Vorrichtung einen Abtastbolzen auf, welcher die Stirnseite des zu bearbeitenden Rohrs abtastet.

Am entgegengesetzten Längsende ist eine Schleifvorrichtung vorgesehen, welche so an ihrem Ausleger eingestellt werden kann, dass sie entweder den radial inneren oder den radial äußeren Rand der vom Abtastbolzen abgetasteten Endfläche des Rohrs abrundend abträgt.

Aus der US 3 134 202 A ist eine Vorrichtung zum abrasiven Reinigen von Rohraußenwänden bekannt.

Aus der US 2 869 293 A ist eine weitere Vorrichtung zur spanenden Bearbeitung von Rohrenden bekannt. Wiederum lehrt diese Druckschrift, ein Vorrichtungsgestell im Inneren des zu bearbeitenden Rohrs zu verspannen und dann über einen axialen Ausleger am Vorrichtungsgestell eine Schleifmaschine zur Bewegung um die Rohrachse herum zu führen. Zur Erleichterung der Betätigung der Schleifmaschine weist der Ausleger ein das Gewicht der Schleifmaschine kompensierendes Gegengewicht auf.

Straßenfräsen weisen zur materialabtragenden Bearbeitung von Fahrbahnbelägen eine um eine Fräswalzenachse rotierbar an der Straßenfräse vorgesehene Fräswalze auf. An ihrer die Fräswalze mit radialem Abstand von der Fräswalzenachse umgebenden Mantelseite der Fräswalze und mitunter an den die Mantelseite an ihren Längsenden abschließenden Stirnseiten ist die Fräswalze mit Meißelhaltern bestückt, in welchen Fräsmeißel auswechselbar gehaltert sind. Dadurch wird der Austausch von im Betrieb der Fräswalze mechanisch hochbelasteten Fräsmeißeln erleichtert.

Ein Fräsmeißel weist üblicherweise einen Meißelschaft auf, welcher dessen Halterung in einem Meißelhalter dient, und weist einen Meißelkopf mit einer Meißelspitze auf, welche im Betrieb den Materialabtrag von der zu bearbeitenden Fahrbahn bewirkt.

Meißelhalter von Straßenfräsen umfassen in der Regel einen hülsenförmigen Abschnitt, welcher im Betrieb der Fräswalze oder an der zum Betrieb hergerichteten Fräswalze den Meißelschaft um dessen Schaftachse herum vollständig umschließt. Der Meißelhalter kann selbst unmittelbar mit dem Fräswalzenkörper verbunden sein, etwa durch Verschweißen. Um auch den Austausch des Meißelhalters zu erleichtern, kann dieser als sogenannter "Meißelwechselhalter" ausgebildet und Teil eines Wechselhaltersystems sein. Ein solches Wechselhaltersystem umfasst einen fest und dauerhaft, beispielsweise durch Verschweißen, mit dem Fräswalzenkörper verbundenen Tragkörper (Basisteil) und den lösbar mit dem Tragkörper verbundenen Meißelwechselhalter, welcher an der zum Betrieb hergerichteten Fräswalze den Meißelschaft vollständig umgibt. Der Meißelwechselhalter ist somit unmittelbar am Tragkörper und mittelbar an dem Fräswalzengrundkörper gehaltert. Der Begriff "Meißelhalter" in der vorliegenden Anmeldung umfasst jede Art von Verbindungsbauteil, welches einen Fräsmeißel mit dem Fräswalzengrundkörper verbindet, auch und besonders einen Meißelwechselhalter.

Der Meißelschaft eines Fräsmeißels erstreckt sich in der Regel längs einer geraden Schaftachse, die in der Regel auch die Meißelachse ist. Die Fräsmeißel sind um ihre Schaftachse drehbar in den Meißelhaltern aufgenommen, um während des Fräsbetriebs eine Rotation der Fräsmeißel um ihre Schaftachse zu gestatten und dadurch einem einseitigen Verschleiß der Meißelspitze entgegenzuwirken. Zum Schutz des Meißelkopfes vor Verschleiß an seinem der Meißelspitze fernen und dem Meißelhalter nahen Bereich ist zwischen dem meißelkopfnäheren Endbereich eines Meißelhalters und dem Meißelkopf eines von dem Meißelhalter gehalterten Fräsmeißels eine Verschleißscheibe als Opferbauteil vorgesehen.

Während des Fräsbetriebs gelangt unvermeidlich feinkörniger Materialabtrag des Fahrbahnbelags zwischen den Meißelkopf bzw. die Verschleißscheibe einerseits und der Endfläche des meißelkopfnäheren Endbereichs des Meißelhalters andererseits. Da der Materialabtrag von Fahrbahnbelägen mineralische oder/und keramische Bestandteile enthält, die nicht nur eine hohe Härte, sondern auch scharfe Bruchkanten aufweisen, wirkt der zwischen Meißelkopf/Verschleißscheibe und den meißelkopfnäheren Endbereich eindringende feinkörnige Materialabtrag dort sehr abrasiv. Durch die gewollte Relativdrehung des Meißels um seine Schaftachse relativ zum Meißelhalter während des Fräsbetriebs wird die abrasive Wirkung des feinkörnigen Materialabtrags zwischen Meißelkopf/Verschleißscheibe und Meißelhalter noch verstärkt und führt trotz der gehärteten Oberflächen des Meißelhalters zu einem erheblichen Verschleiß unter anderem des meißelkopfnäheren Meißelhalter-Endbereichs.

Durch diesen Verschleiß werden die meißelkopfnäheren, in der Regel hülsenförmigen, Abschnitte der Meißelhalter längs der Aufnahmeachse ihrer Meißelaufnahmeöffnung von der Meißel-Einführmündung her, durch welche hindurch der Meißelschaft in die Meißelaufnahmeöffnung eingesetzt wird, abgetragen. Die im Fräsbetrieb dem Meißelkopf zugewandte Endfläche wird daher verschleißgetrieben verlagert. Dieser Materialabtrag erfolgt günstigstenfalls in einer Ebene etwa orthogonal zur Aufnahmeachse, welche bei in der Meißelaufnahmeöffnung aufgenommenem Fräsmeißel mit der Schaftachse des Fräsmeißels bevorzugt zusammenfällt. In weniger günstigen Verschleißfällen erfolgt der Verschleiß in Umfangsrichtung um die Aufnahmeachse ungleichmäßig, sodass die zum Meißelkopf hinweisende Endfläche des Meißelhalters einen von einem rechten Winkel verschiedenen Winkel mit der Aufnahmeachse einschließen oder/und um eine oder mehrere zur Aufnahmeachse orthogonale Krümmungsachsen gekrümmt sein kann.

Durch den beschriebenen Verschleiß der meißelkopfnäheren Meißelhalter-Endbereiche mit ihrer Endfläche, an der der Meißelkopf in der Regel unter Zwischenanordnung der Verschleißscheibe anliegt, verändert sich die Lage der Material von der Fahrbahn abtragenden Meißelspitze, was die Bearbeitungscharakteristik der Fräswalze während des Fräsbetriebs insgesamt verändert.

Grundsätzlich ist es natürlich möglich, verschlissene Meißelhalter bzw. verschlissene Bauteile derselben durch neue zu ersetzen. Dies ist jedoch aufwändig und deshalb teuer.

Im Stand der Technik ist es bekannt, typgleiche Meißelhalter unterschiedlicher Länge längs der Aufnahmeachse bereitzuhalten. Abhängig vom Verschleißzustand der meißelkopfnäheren Endbereiche der Meißelhalter einer Fräswalze können dann die Meißelhalter mit den am stärksten verschlissenen Endbereichen an der Fräswalze belassen werden, während weniger stark verschlissene Meißelhalter gegen neue, jedoch kürzere Meißelhalter ausgetauscht werden, so dass nach der Instandsetzung die im Fräsbetrieb dem Meißelkopf zugewandten Endflächen von Meißelhaltern, verglichen mit dem ursprünglichen Zustand der Meißelhalter vor Aufnahme des verschleißbegründenden Fräsbetriebs, um etwa denselben Verlagerungsbetrag längs der Aufnahmeachse verlagert sind. Damit liegen die Fräsmeißel wieder auf einheitlichen, jedoch verglichen mit dem ursprünglichen Zustand der Meißelhalter vor Aufnahme des verschleißbegründenden Fräsbetriebs, kleineren Schnittkreisen. Es müssen insgesamt weniger Meißelhalter als bei einem vollständigen Ersatz ausgetauscht werden.

Der Unterschied in den Schnittkreisdurchmessern kann durch Veränderung der Frästiefe angepasst werden, sodass mit der instandgesetzten Fräswalze unter Beachtung ihrer veränderten relevanten Schnittmaße dasselbe qualitativ hochwertige Fräsergebnis erzielbar ist wie mit einer unverschlissenen Fräswalze.

Nachteilig ist jedoch, dass die Instandsetzung der Fräswalze aufgrund der nur in vorbestimmten unterschiedlichen diskreten Längen bereitgehaltenen Meißelhalter nur dann sinnvoll durchgeführt werden kann, wenn ein bestimmter Verschleißgrad erreicht ist. Wird der für eine Instandsetzung optimale Verschleißgrad verpasst, ist eine durchgeführte Instandsetzung wegen der dann konstruktiv nicht optimal zum Verschleißgrad passenden verfügbaren Ersatz-Meißelhalter nur suboptimal.

Es ist daher Aufgabe der Erfindung eine technische Lehre bereitzustellen, die eine technisch vorteilhaftere Instandsetzung von Straßenfräsen-Fräswalzen mit Meißelhaltern mit verschlissenen meißelkopfnäheren Endbereichen ermöglicht als der Stand der Technik.

Diese Aufgabe wird gemäß einem ersten Aspekt der vorliegenden Erfindung gelöst durch ein Verfahren der eingangs genannten Art, bei welchem das Bereitstellen der Fräswalze mit Meißelhaltern mit längs der Aufnahmeachse verlagerten Endflächen eine spanende Bearbeitung an den meißelkopfnäheren Endbereichen der Meißelhalter mit längs der Aufnahmeachse verlagerten Endflächen umfasst.

Durch die spanende Bearbeitung an den meißelkopfnäheren Endbereichen können diese stufenlos bearbeitet werden. Die Endflächen der meißelkopfnäheren Endbereiche können somit stufenlos längs der Aufnahmeachse verlagert werden, sodass eine optimale Instandsetzung einer Fräswalze mit verschlissenen Meißelhaltern zu jedem Zeitpunkt möglich ist.

Die Ermittlung des meißelhalterbezogenen Verschleißzustands erfordert im Übrigen keine akribische Vermessung der Meißelhalter einer Fräswalze, nicht einmal die zahlenmäßige Quantifizierung des Verschleißes. Es reicht hierzu aus, sich so weit Informationen über den Verschleißzustand der Meißelhalter einer Fräswalze zu verschaffen, dass hieraus der Umfang der notwendigen spanenden Bearbeitung zur Instandsetzung abgeleitet werden kann. Dabei kann es ausreichen, den Meißelhalter oder eine Gruppe von Meißelhaltern mit jeweils am stärksten verschlissenen meißelkopfnäheren Endbereichen zu bestimmen, um ausgehend von dessen bzw. deren Verschleißbetrag zu ermitteln, zu welchem Ort die Endflächen von Meißelhaltern der Fräswalze verlagert werden müssen, damit Meißelhalter, die im ursprünglichen Zustand vor Aufnahme des verschleißbegründenden Fräsbetriebs auf einem einheitlichen Schnittkreis lagen, erneut im Wesentlichen auf einem einheitlichen Schnittkreis liegen, der jedoch verglichen mit dem ursprünglichen Schnittkreis einen geringeren Durchmesser haben wird. Weist eine Fräswalze im ursprünglichen Zustand, vor Aufnahme des verschleißbegründenden Fräsbetriebs, Meißelhalter auf, die auf unterschiedlichen Schnittkreisen liegen, so sollten die Radialabstände der unterschiedlichen Schnittkreise der instandgesetzten Fräswalze voneinander die betragsmäßig gleichen sein wie jene der ursprünglichen unverschlissenen Fräswalze, damit auf dem mit der instandgesetzten Fräswalze bearbeiteten Fahrbahnbelag das gleiche Fräsbild erhalten wird wie mit der ursprünglichen unverschlissenen Fräswalze. Es kann beispielsweise ausreichen, wenn ein Verschleißzustand, etwa anhand von vorbestimmten Verschleißmarken oder anhand von Lehren im Rahmen der für die Fräsbearbeitung von Fahrbahnoberflächen erforderlichen Genauigkeit bestimmt wird.

Eine Ermittlung des Verschleißzustands und eine Verlagerung der dem Meißelkopf näheren Endflächen von weiteren Meißelhaltern abhängig vom ermittelten Verschleißzustand im Sinne der vorliegenden Erfindung liegt im Übrigen beispielsweise auch dann vor, wenn zunächst aufgrund einer groben Beschau der benutzten Fräswalze ein herausragend verschlissener Meißelhalter ermittelt und instandgesetzt wird und weitere Meißelhalter, deren Endflächen mit jener des instandgesetzten Meißelhalters in vorbestimmter räumlicher Beziehung stehen sollen, anhand der beim Instandsetzen des ersten Meißelhalters aufgefundenen Vorrichtungseinstellungen unter Verlagerung ihrer meißelkopfnäheren Endflächen spanend bearbeitet werden.

Ganz grundsätzlich kann die spanende Bearbeitung beliebig erfolgen. Rotationssymmetrische Meißelhalter können beispielsweise durch Abdrehen spanend bearbeitet werden, wodurch ihre Endflächen längs der Aufnahmeachse verlagert werden. Allerdings sind nicht alle Meißelhalter rotationssymmetrisch und dadurch für eine Drehbearbeitung geeignet. Außerdem müssen Meißelhalter für eine Drehbearbeitung von der Fräswalze gelöst und nach der Drehbearbeitung wieder an dieser befestigt werden, was den Arbeits- und Zeitaufwand für die Instandsetzung erheblich erhöht. Es ist daher bevorzugt, dass die spanende Bearbeitung von der im Fräsbetrieb zum Meißelkopf hinweisenden Endfläche des meißelkopfnäheren Endbereichs längs der Aufnahmeachse erfolgt. Denn längs der Aufnahmeachse ist der Meißelhalter auch im an der Fräswalze angebrachten Zustand zugänglich, sodass die spanende Bearbeitung des meißelkopfnäheren Endbereichs eines Meißelhalters längs der Aufnahmeachse ohne Lösen des Meißelhalters von einem Fräswalzengrundkörper erfolgen kann. Die spanende Bearbeitung von Meißelhaltern kann dann zeit- und kostensparend erfolgen, während diese mit einem Fräswalzengrundkörper der Fräswalze verbunden sind. Darüber hinaus kann die ebenfalls längs der Aufnahmeachse zugängliche Aufnahmeöffnung vorteilhaft als Werkzeugführung für die Zustellung des spanend bearbeitenden Werkzeugs längs der Aufnahmeachse verwendet werden.

Da die Instandsetzung der Fräswalze im Wesentlichen dazu dient, durch Verschleiß erzeugte Längenunterschiede der Meißelhalter wieder zu egalisieren, kann dann, wenn im Zuge der Ermittlung des meißelhalterbezogenen Verschleißzustands wenigstens der Meißelhalter oder die Gruppe von Meißelhaltern mit maximal verschlissenen meißelkopfnäheren Endbereichen ermittelt wird bzw. werden, durch die spanende Bearbeitung des meißelkopfnäheren Endbereichs eines Meißelhalters dessen Endfläche bezogen auf ihre Lage im ursprünglichen unverschlissenen Zustand um wenigstens den Betrag längs der Aufnahmeachse verlagert werden, um welchen die Endfläche des Meißelhalters mit dem maximal verschlissenen meißelkopfnäheren Endbereich bezogen auf ihre Lage im ursprünglichen unverschlissenen Zustand durch Verschleiß längs der Aufnahmeachse verlagert wurde. Hierdurch kann in einfacher Weise eine Fräswalze mit wiederum konstruktiv einheitlichen Meißelhaltern und damit mit einheitlichen, jedoch gegenüber dem unverschlissenen Zustand verringerten Schnittkreisen erhalten werden.

Da eine Fräswalze abhängig von ihrem Einsatzzweck unterschiedlich viele, jedoch stets eine Mehrzahl von im Wesentlichen baugleichen oder wenigstens konstruktiv ähnlichen Meißelhaltern aufweist, ist eine zügige Bearbeitung verschlissener Meißelhalter wirtschaftlich von erheblichem Vorteil.

Die eingangs genannte Aufgabe wird gemäß einem weiteren Aspekt gelöst durch eine Vorrichtung zur spanenden Bearbeitung von verschleißbelasteten meißelkopfnäheren Endbereichen von Meißelhaltern von Straßenfräsen, welche Vorrichtung ausgebildet ist für die Ausführung des Instandsetzungsverfahrens nach einem der vorhergehenden Ansprüche, wobei die Vorrichtung umfasst:
- einen Drehantrieb mit einem sich um eine Antriebsdrehachse drehenden Ausgangsglied,
- wenigstens ein um eine Werkzeugdrehachse drehbares Zerspanwerkzeug, welches zur gemeinsamen Drehung mit dem Ausgangsglied gekoppelt oder koppelbar ist,
- einen sich längs einer Dornachse erstreckenden Positionierungsdorn, welcher zur Einführung in eine Meißelaufnahmeöffnung eines Meißelhalters ausgebildet ist und welcher einen radial von der Dornachse entfernt gelegenen und in eine Richtung mit radialer Komponente von der Dornachse wegweisenden Anlageabschnitt aufweist, der zur Anlage an eine Innenwandung der Meißelaufnahmeöffnung ausgebildet ist,
wobei ein mit Schneiden besetzter Zerspanbereich des Zerspanwerkzeugs zwischen dem Positionierungsdorn und dem Ausgangsglied angeordnet ist.

Durch den beschriebenen Positionierungsdorn kann die stets vorhandene Meißelaufnahmeöffnung der Meißelhalter zur ausreichend orts- und orientierungsgenauen Positionierung des Zerspanwerkzeugs relativ zum Meißelwechselhalter verwendet werden. Das Zerspanwerkzeug befindet sich daher erfindungsgemäß zwischen dem die Vorrichtung mit dem Zerspanwerkzeug positionierenden Positionierungsdorn und dem das Zerspanwerkzeug zur Zerspanbewegung antreibenden Drehantrieb. Das beschriebene Ausgangsglied kann ein Spannfutter sein, an welchem ein Zerspanwerkzeug eingespannt sein kann. Es kann jedoch auch eine Ausgangswelle sein, von welcher Drehmoment des Drehantriebs abgegriffen und zum Zerspanwerkzeug übertragen werden kann.

Der Positionierungsdorn nutzt mit dem Anlageabschnitt die von Verschleiß wenig betroffene Innenwandung der Meißelaufnahmeöffnung. Neben der geringen Verschleißbelastung der Innenwandung und der damit verbundenen Formtreue der Innenwandung auch über lange Betriebszeiten hinweg hat die Innenwandung der Meißelaufnahmeöffnung darüber hinaus den Vorteil, dass sie in der Regel zylindrisch ausgebildet ist und somit eine für eine exakte Positionierung des Zerspanwerkzeugs nutzbare einfache Regelgeometrie darstellt.

Grundsätzlich kann es für eine exakte Positionierung des Zerspanwerkzeugs relativ zum Meißelhalter ausreichen, wenn der Positionierungsdorn lediglich zur Anlage an der Innenwandung der Meißelaufnahmeöffnung längs eines schmalen, zur Dornachse parallelen Anlagebereichs ausgebildet ist. Der Positionierungsdorn weist dann in der Regel einen kleineren Durchmesser auf als die Meißelaufnahmeöffnung.

Vorteilhaft kann es jedoch auch sein, den Positionierungsdorn zur Zentrierung relativ zur Meißelaufnahmeöffnung zu nutzen, sodass die Dornachse des korrekt in die Meißelaufnahmeöffnung eingeführten Positionierungsdorns kollinear mit der Aufnahmeachse der Meißelaufnahmeöffnung ist. Für diesen letztgenannten Fall ist es vorteilhaft, wenn der zur Anlage an die Innenwandung der Meißelaufnahmeöffnung ausgebildete Anlageabschnitt eine Mehrzahl von in Umfangsrichtung um die Dornachse mit Abstand voneinander angeordnete Teil-Anlageabschnitte aufweist. Beispielsweise könnte der Positionierungsdorn drei oder mehr äquidistante in Umfangsrichtung um die Dornachse mit Abstand voneinander angeordnete Teil-Anlageabschnitte aufweisen. Jeder Teil-Anlageabschnitt kann durch ein federvorbelastetes Bauteil gebildet sein, sodass es bei Einführung des Positionierungsdorns in die Meißelaufnahmeöffnung gegen die Vorspannwirkung seiner Vorspannfeder radial zur Dornachse hin ausgelenkt wird.

Für eine möglichst genaue Positionierung des Positionierungsdorns relativ zum Meißelhalter bei gleichzeitig geringer Flächenpressung zwischen dem Anlageabschnitt bzw. den Teil-Anlageabschnitten und der Innenwandung der Meißelaufnahmeöffnung ist es vorteilhaft, wenn der Anlageabschnitt in Umfangsrichtung um die Dornachse umläuft, insbesondere vollständig geschlossen umläuft. Der Anlageabschnitt kann beispielsweise durch einen oder mehrere umlaufende Ringe gebildet sein.

Um bei korrekter Zentrierung des Positionierungsdorns einen Winkelversatz zwischen Dornachse und Aufnahmeachse der Meißelaufnahmeöffnung zu vermeiden, ist es weiter vorteilhaft, wenn der Anlageabschnitt in axialer Richtung längs der Dornachse wenigstens zwei Teil-Anlageabschnitte aufweist, die mit axialem Abstand voneinander jeweils zur Anlage an der Innenwandung der Meißelaufnahmeöffnung ausgebildet sind.

Eine exakte Zentrierung des Positionierungsdorns bei gleichzeitiger möglichst kollinearer Anordnung von Dornachse und Aufnahmeachse kann dadurch erreicht werden, dass der Anlageabschnitt des Positionierungsdorns an einer konischen oder zylindrischen Außenfläche des Positionierungsdorns ausgebildet ist, sodass der Anlageabschnitt eine Anlagefläche aufweist, welche nicht nur bevorzugt vollständig geschlossen um die Dornachse umläuft, sondern sich axial längs der Dornachse über eine Abmessung erstreckt, welche bevorzugt länger als der Durchmesser ist, bevorzugt wenigstens das Doppelte des Durchmessers der Anlagefläche beträgt.

Eine häufig hülsenförmige Gestalt der Meißelhalter bzw. der den Meißelschaft halternden Meißelhalterabschnitte verführt dazu, den meißelkopfnäheren Endbereich eines Meißelhalters gleichzeitig längs seines gesamten Umfangs um die Aufnahmeachse spanend zu bearbeiten. Dies ist jedoch nachteilig, da der Meißelhalter in der Regel aus gehärtetem Stahl hergestellt ist und eine Bearbeitung desselben mit ununterbrochenem Schneideingriff zu einer Erwärmung der Bearbeitungsstelle führt, die das Zerspanwerkzeug zerstören kann, bevor das Bearbeitungsergebnis erreicht ist. Dabei ist bevorzugt an eine spanende Bearbeitung gedacht, bei welcher keine Kühl-oder Kühlschmiermittel an die Bearbeitungsstelle zugeführt werden. Denn bevorzugt soll die spanende Bearbeitung zur Instandsetzung von verschlissenen meißelkopfnäheren Endbereichen von Meißelhaltern auch mobil auf Baustellen erfolgen können, an welchen die jeweiligen Meißelhalter an Fräswalzen gerade im Einsatz sind. Dabei soll die Instandsetzung besonders bevorzugt erfolgen, während die instandzusetzende Fräswalze an eine Straßenfräse anmontiert ist.

Bevorzugt ist daher das Zerspanwerkzeug zur spanenden Bearbeitung mit unterbrochenem Schneideingriff an der Vorrichtung angeordnet und ausgebildet. Dies kann bei Positionierung der Vorrichtung bzw. des Zerspanwerkzeugs durch den Positionierungsdorn dadurch sichergestellt sein, dass die Werkzeugdrehachse von der Dornachse verschieden ist, wobei bevorzugt die Werkzeugdrehachse parallel zur Dornachse und mit Abstand von dieser angeordnet ist. Dann, wenn der Positionierungsdorn in die Meißelaufnahmeöffnung derart eingeführt ist, dass Dornachse und Aufnahmeachse kollinear sind, ist die Werkzeugdrehachse im letztgenannten Fall einer vorteilhaften Weiterbildung der vorliegenden Erfindung exzentrisch zur Meißelaufnahmeöffnung angeordnet. Der Positionierungsdorn dreht im Falle seiner zur Werkzeugdrehachse versetzten Anordnung nicht gemeinsam mit dem Werkzeug.

Verschieden ist die Werkzeugdrehachse von der Dornachse dann, wenn sie mit dieser nicht kollinear ist. Bevorzugt ist die Werkzeugdrehachse parallel zur Dornachse und mit Abstand von dieser angeordnet, da dann in besonders einfacher und schlanker Bauweise der Vorrichtung mit dem Zerspanwerkzeug eine die Meißel-Einführmündung umgebende ebene und zur Aufnahmeachse der Meißelaufnahmeöffnung bzw. zu der Dornachse des in die Meißelaufnahmeöffnung eingeführten Positionierungsdorns orthogonale Endfläche (Stirnfläche) schnell und mit hoher Lagegenauigkeit erzeugt werden kann. Durch eine allgemein von der Dornachse verschiedene Werkzeugdrehachse kann jedoch auch eine andere Ausbildung dieser Stirnfläche erzeugt werden, beispielsweise eine konische Stirnfläche.

Die oben genannte Verlagerung der Endfläche längs der Aufnahmeachse erfolgt also in der Regel dadurch, dass eine zur ursprünglich vorhandenen Endfläche, die in der vorliegenden Anmeldung auch als "Stirnfläche" bezeichnet ist, nachdem sie durch Verschleiß verlagert oder zerstört wurde, durch die spanende Bearbeitung des meißelkopfnäheren Endbereichs an einer abhängig vom ermittelten Verschleißzustand bestimmten Ort am Meißelhalter erneut erzeugt wird.

Um sicherzustellen, dass das Zerspanwerkzeug bei unterbrochenem Schneideingriff den meißelkopfnäheren Endbereich des Werkzeughalters längs seines gesamten Umfangs spanend bearbeiten kann, ist vorteilhafterweise vorgesehen, dass das wenigstens eine Zerspanwerkzeug sowohl um die Werkzeugdrehachse als auch um die Dornachse drehbar ist.

Dabei ist üblicherweise vorgesehen, dass die Drehgeschwindigkeit des Zerspanwerkzeugs um seine Werkzeugdrehachse um Größenordnungen größer ist als eine Drehbewegung des Zerspanwerkzeugs um die Dornachse.

Das Zerspanwerkzeug kann ein Werkzeug mit geometrisch bestimmter Schneide sein, wie beispielsweise ein um die Werkzeugdrehachse rotierender Fräser, im vorliegenden Fall insbesondere Stirnfräser, um mit diesem eine möglichst ebene und zur Aufnahmeachse orthogonale End- bzw. Stirnfläche am meißelkopfnäheren Längsende des Meißelhalters erzeugen zu können. Das Zerspanwerkzeug kann ebenso ein Werkzeug mit geometrisch unbestimmter Schneide sein, wobei dann wegen des pro Zeiteinheit größeren Zerspanvolumens ein Schneidwerkzeug mit gebundenem Korn bevorzugt ist. Beispielsweise kann das Zerspanwerkzeug ein Stirnschleifwerkzeug sein.

Grundsätzlich kann der Positionierungsdorn einstückig ausgebildet sein.

Gerade um jedoch für eine manuelle Bedienung der Vorrichtung die Drehbarkeit des Zerspanwerkzeugs um die Dornachse bei geringem Drehmoment um die Dornachse sicherzustellen, kann es vorteilhaft sein, den Positionierungsdorn mehrteilig auszubilden. Der Positionierungsdorn kann dann wenigstens eine bezogen auf die Dornachse radial weiter außen gelegene Anlagebauteilanordnung aufweisen, welche den Anlageabschnitt aufweist, der zur Anlage an die Innenwandung der Meißelaufnahmeöffnung ausgebildet ist. Radial weiter innen kann eine Dornkernanordnung gelegen sein. In diesem Fall kann die Anlagebauteilanordnung aus gehärtetem Material ausgebildet sein, um möglichst verschleißfrei wiederholt in eine Meißelaufnahmeöffnung eingeführt und aus dieser wieder entnommen werden zu können. Die Dornkernanordnung braucht dagegen nicht mit der Robustheit der Anlagebauteilanordnung ausgeführt sein. Die Dornkernanordnung kann jedoch relativ zur Anlagebauteilanordnung beweglich angeordnet sein, und zwar grundsätzlich bezüglich der Dornachse axial zur Anlagebauteilanordnung oder/und in Umfangsrichtung um die Dornachse herum. Bevorzugt sind die Anlagebauteilanordnung und die Dornkernanordnung relativ zueinander um die Dornachse drehbar, sodass die Anlagebauteilanordnung fest und sicher in Anlage mit der Innenwandung der Meißelaufnahmeöffnung stehen kann, während die Dornkernanordnung relativ zur Anlagebauteilanordnung um die Dornachse verdreht werden kann, um damit auch das Zerspanwerkzeug um die Dornachse zu drehen und ihm somit eine Vorschubbewegung in Umfangsrichtung um die Dornachse zu verleihen.

Zwischen der Anlagebauteilanordnung und der Dornkernanordnung kann ein Wälz-oder ein Gleitlager ausgebildet sein. Es kann auch die Dornkernanordnung selbst mit der Anlagebauteilanordnung eine Gleitlagerpaarung bilden, wobei aus den oben genannten Gründen die Anlagebauteilanordnung dann bevorzugt das härtere der beiden Anordnungsmaterialien aufweist.

Zur besonders exakten Führung des Zerspanwerkzeugs insbesondere um die Dornachse herum kann die Vorrichtung bevorzugt einen Werkzeugträger aufweisen. Relativ zum Werkzeugträger ist das Zerspanwerkzeug um die Werkzeugdrehachse drehbar, wobei die Werkzeugdrehachse relativ zum Werkzeugträger bevorzugt unverlagerbar festgelegt ist. In diesem Falle kann das Zerspanwerkzeug gemeinsam mit dem Werkzeugträger zu einer Vorschubbewegung geführt sein, insbesondere in Umfangsrichtung um die Dornachse. Das Zerspanwerkzeug kann drehbar unmittelbar im Werkzeugträger gelagert sein oder/und kann mittelbar oder unmittelbar mit dem Ausgangsglied des Drehantriebs Drehmoment übertragend gekoppelt sein. Der Drehantrieb kann fest und unbeweglich mit dem Werkzeugträger gekoppelt sein.

Zur Bereitstellung einer exakten Vorschubbewegung des Zerspanwerkzeugs um die Dornachse kann der Werkzeugträger mit dem Positionierungsdorn zur gemeinsamen Bewegung gekoppelt sein. Dann, wenn der Positionierungsdorn, wie oben beschrieben, mehrteilig ausgebildet ist, ist der Werkzeugträger bevorzugt mit der Dornkernanordnung zur gemeinsamen Bewegung gekoppelt, wobei der Werkzeugträger dann ebenso bevorzugt relativ zur Anlagebauteilanordnung um die Dornachse drehbar ist, sodass die Anlagebauteilanordnung des Positionierungsdorns, während der Positionierungsdorn in die Meißelaufnahmeöffnung eingeführt ist, mit dem Meißelhalter reibschlüssig gekoppelt oder durch eine Spanneinrichtung klemmend festgelegt sein kann.

Die Werkzeugdrehachse kann kollinear mit der Antriebsdrehachse angeordnet sein, insbesondere dann, wenn es sich bei dem Ausgangsglied des Drehantriebs um ein Spannfutter handelt. Dann, wenn die Vorrichtung mehrere parallel betreibbare Zerspanwerkzeuge aufweisen soll, um eine höhere Zerspanleistung bereitzustellen, ist es vorteilhaft, wenn das wenigstens eine Zerspanwerkzeug mit von der Antriebsdrehachse verschiedener Werkzeugdrehachse angeordnet ist. Zwischen dem Ausgangsglied des Drehantriebs und dem Zerspanwerkzeug kann dann ein Drehmoment übertragendes Getriebe vorgesehen sein, welches den Unterschied an Lage oder/und Orientierung der beiden beteiligten Drehachsen ausgleicht. Die Anordnung eines Drehmoment übertragenden Getriebes zwischen dem Ausgangsglied und dem Zerspanwerkzeug bietet die Möglichkeit, eine Mehrzahl von Zerspanwerkzeugen an der Vorrichtung vorzusehen, wobei dann jedes aus der Mehrzahl von Zerspanwerkzeugen um eine eigene Werkzeugdrehachse drehbar ist. Die Werkzeugdrehachsen der Mehrzahl von Zerspanwerkzeugen sind vorzugsweise parallel, was die konstruktive Ausgestaltung des Getriebes vereinfacht. Zum sicheren Drehantrieb eines jeden Zerspanwerkzeugs verbindet das Getriebe jedes Zerspanwerkzeug aus der Mehrzahl von Zerspanwerkzeugen Drehmoment übertragend mit dem Ausgangsglied.

Eine radial vorteilhaft schlanke Vorrichtung, d. h. eine Vorrichtung mit orthogonal zur Dornachse möglichst geringen Abmessungen, kann trotz der Verwendung einer Mehrzahl von gleichzeitig antreibbaren Zerspanwerkzeugen erhalten werden, wenn die Antriebsdrehachse kollinear zur Dornachse orientiert ist. Eine schlanke Vorrichtung ist von Vorteil, wenn die Meißelhalter unmittelbar an der Fräswalze angeordnet durch spanende Bearbeitung instandgesetzt werden sollen, da dann je nach konstruktiver Gestaltung der Fräswalze möglicherweise nur wenig Bauraum stirnseitig an den einzelnen Meißelhaltern für die Anordnung der Vorrichtung verfügbar sein kann. Die Zerspanwerkzeuge können nur um ihre jeweilige Werkzeugdrehachse drehbar im Werkzeughalter gelagert sein, wobei die Zerspanwerkzeuge dann bevorzugt in einer Umfangsrichtung um ein zentrales Zahn- oder Reibrad des Getriebes herum angeordnet sind, sodass durch Kopplung des zentralen Zahn- oder Reibrads des Getriebes mit dem Ausgangsglied des Drehantriebs alle Zerspanwerkzeuge gleichzeitig zur Drehung um ihre jeweilige Werkzeugdrehachse angetrieben sein können. In diesem Falle ist es vorteilhaft, wenn der Werkzeughalter relativ zum Drehantrieb um die Antriebsdrehachse drehbar ist, um die einzelnen Zerspanwerkzeuge in eine Vorschubrichtung um die Antriebsdrehachse bewegen zu können, ohne den Drehantrieb mitdrehen zu müssen. Da in diesem Fall bevorzugt die Antriebsdrehachse mit der Dornachse zusammenfällt, ist in diesem Fall die Vorschubbewegung der Zerspanwerkzeuge auch eine Vorschubbewegung in Umfangsrichtung um die Dornachse, wie sie oben beschrieben wurde.

Um eine möglichst gleichmäßige Vorschubbewegung der Zerspanwerkzeuge um die Dornachse oder/und die Antriebsdrehachse bewirken zu können, umfasst das Getriebe bevorzugt ein Planetengetriebe oder ist ein Planetengetriebe. In diesem Falle ist es bevorzugt, wenn das Ausgangsglied des Drehantriebs mit dem Sonnenrad drehmomentübertragend gekoppelt ist und wenn jedes Zerspanwerkzeug aus der Mehrzahl von Zerspanwerkzeugen mit je einem Planetenrad des Planetenradgetriebes drehmomentübertragend gekoppelt ist. Der Werkzeugträger kann dann ein Hohlrad des Planetengetriebes bilden, wobei er dann bevorzugt drehfest mit dem Drehantrieb verbunden ist. In diesem Fall sind die Werkzeugdrehachsen nicht ortsfest am Werkzeugträger, sondern am Planetenradträger festgelegt.

Wie oben ausführlich beschrieben ist, kann ganz allgemein die Antriebsdrehachse entweder parallel zur Werkzeugdrehachse und mit Abstand von dieser angeordnet sein, oder sie kann kollinear mit der Werkzeugdrehachse angeordnet sein, wobei letztgenannte Anordnung dann bevorzugt ist, wenn lediglich ein einziges Zerspanwerkzeug vorgesehen ist. Es soll jedoch nicht ausgeschlossen sein, dass das Planetengetriebe auch dann zum Einsatz kommt, wenn nur ein Zerspanwerkzeug an der Vorrichtung angeordnet oder anordenbar ist.

Um sicherzustellen, dass die spanende Bearbeitung durch die Vorrichtung nur in einem vorgeschriebenen Ausmaß stattfindet, also die durch die Vorrichtung bearbeitete Endfläche am Werkzeughalter eine vorbestimmte Lage relativ zum Werkzeughalter und damit relativ zur Fräswalzenachse einnimmt, kann die Vorrichtung einfach und sicher einen Anschlag zur Begrenzung einer längs der Dornachse erfolgenden Zustellbewegung des Zerspanwerkzeugs aufweisen. Hier bietet sich die Ausbildung eines Anschlags am Positionierungsdorn an, da dieser in die Meißelaufnahmeöffnung des Meißelhalters eingreift und somit einer wenig verschleißbelasteten Formation gegenüberliegt. Zur Einstellung des Anschlags kann dieser längs der Dornachse verlagerbar sein, etwa durch eine kollinear oder parallel zur Dornachse stirnseitig in den Positionierungsdorn, insbesondere in die Dornkernanordnung, eingedrehte Anschlagschraube ausgebildet sein. Als "Anschlagschraube" gilt dabei jeder mechanische Anschlag, welcher durch einen mit diesem gekoppelten Gewindeschaft mit dem Positionierungsdorn verbunden ist.

Der Positionierungsdorn mit verlagerbarem Anschlag kann als eine oben erwähnte Lehre zur Ermittlung des Verschleißzustands dienen. Beispielsweise kann ein verschlissener Meißelhalter mit der hier beschriebenen Vorrichtung bearbeitet werden, wobei der Anschlag solange an der Vorrichtung, insbesondere am Positionierdorn verlagert wird, bis der Meißelhalter an seiner meißelkopfnäheren Endfläche ausreichend instandgesetzt ist. Mit der so gefundenen Einstellung des Anschlags werden dann erforderlichenfalls die Endflächen weiterer Meißelhalter bearbeitet, deren Endflächenposition auf jene des zuerst bearbeiteten abgestimmt sein sollte.

Der Anschlag der Vorrichtung kann mit einem Abschnitt des Meißelhalters, insbesondere eines Meißelwechselhalters, als Gegenanschlag wechselwirken, oder kann mit einer den Meißelhalter bzw. hülsenförmigen Abschnitt eines Meißelwechselhalters spannenden Spannvorrichtung als Gegenanschlag wechselwirken.

Mit der oben beschriebenen Vorrichtung ist vor allem eine definierte, die Meißel-Einführmündung der Meißelaufnahmeöffnung einfassende End- bzw. Stirnfläche des meißelkopfnäheren Endbereichs des Meißelhalters spanend bearbeitbar. Es soll jedoch nicht ausgeschlossen sein, dass das Zerspanwerkzeug ein Konturfräser oder ein Kontur-Schleifwerkzeug ist, mit welchem eine Fase zwischen der Stirnfläche des Meißelhalters und der Innenwandung der Meißelaufnahmeöffnung erzeugt werden kann. Die Fase dient als Einführhilfe des Meißelschaftes in die Meißelaufnahmeöffnung von der Meißel-Einführmündung her.

Die Fase zwischen Stirnseite des Meißelhalters und der Innenwandung seiner Meißelaufnahmeöffnung kann jedoch auch durch eine Vorrichtung spanend erzeugt werden, bei welcher die Werkzeugdrehachse kollinear mit der Dornachse angeordnet ist. Dabei kann der Positionierungsdorn integral mit dem Zerspanwerkzeug ausgebildet sein, sodass dieser gemeinsam mit dem Zerspanwerkzeug um die Werkzeugdrehachse rotiert. Der Positionierungsdorn ist dann bevorzugt mit einem kleineren Durchmesser ausgebildet als die Meißelaufnahmeöffnung, in welche er eingeführt ist, sodass das Zerspanwerkzeug wiederum mit unterbrochenem Schneideingriff zur Erzeugung der Fase betrieben werden kann. Da unter den gegebenen Umständen alleine mit einem Positionierungsdorn, dessen Durchmesser kleiner als jener der Meißelaufnahmeöffnung ist, gerade bei Auftreten der zu erwartenden Schneidkräfte am Zerspanwerkzeug zur Bildung der beschriebenen Fase eine eindeutige Lagebeziehung zwischen Zerspanwerkzeug und Meißelhalter nur mit Schwierigkeiten sichergestellt werden kann, weist die Vorrichtung bevorzugt eine zur Werkzeugdrehachse orthogonale Ausrichtfläche auf, welche zur Anlage an die die Meißel-Einführmündung der Meißelaufnahmeöffnung einfassende End- bzw. Stirnfläche des Meißelhalters ausgebildet ist. Bevorzugt wird daher zunächst mit einer Vorrichtung spanend die Endfläche des meißelkopfnäheren Endbereichs des Meißelhalters bearbeitet, sodass diese im Anschluss an ihre Erzeugung als Anlage- und Bezugsfläche für die Ausrichtfläche der Vorrichtung dienen kann. Dann kann die Vorrichtung mit Ausrichtfläche und Positionierungsdorn wieder eindeutig relativ zum Werkzeughalter auch während der spanenden Bearbeitung der Fase am Werkzeughalter positioniert sein. Der Positionierungsdorn berührt die Innenwandung der Meißelaufnahmeöffnung dann nur längs einer linienhaften Berührfläche, welche parallel zur Dornachse verläuft. Dann, wenn der Positionierungsdorn integral mit dem Zerspanwerkzeug ausgebildet ist, befindet er sich während der spanenden Bearbeitung in gleitender Anlage an der Innenwandung.

Die vorliegende Anmeldung betrifft über die oben beschriebene und weitergebildete Vorrichtung hinaus eine Instandsetzungsbaugruppe, umfassend eine Vorrichtung zur spanenden Bearbeitung meißelkopfnäherer Endbereiche von Meißelhaltern, wie sie oben beschrieben und weitergebildet ist, und weiter umfassend wenigstens einen Meißelhalter, insbesondere Meißelwechselhalter, einer Straßenfräse mit einer längs einer Aufnahmeachse in den Meißelhalter hinein, vorzugsweise durch diesen hindurch, verlaufenden Meißelaufnahmeöffnung. Der wenigstens eine Meißelhalter weist dabei bevorzugt einen hülsen- bzw. rohrförmigen Abschnitt auf, welcher im bestimmungsgemäß für den Fräsbetrieb hergerichteten Zustand einen Schaft eines Meißels vollständig umgibt. Für eine effektive und schnelle Instandsetzung ist der Meißelhalter bevorzugt mit einem Fräswalzengrundkörper verbunden, so dass die Instandsetzungsbaugruppe bevorzugt eine Mehrzahl von Meißelhaltern umfasst, die mit einem gemeinsamen Fräswalzengrundkörper verbunden sind. Da die Instandsetzung vorteilhaft unmittelbar auf einer Baustelle erfolgt, auf welcher eine die instandzusetzende Fräswalze tragende Straßenfräse eingesetzt ist, umfasst die Instandsetzungsbaugruppe weiter bevorzugt eine Straßenfräse mit einer daran anmontierten Fräswalze mit einem Fräswalzengrundkörper und einer Mehrzahl von mit dem Fräswalzengrundkörper verbundenen Meißelhaltern. Die oben beschriebene Vorrichtung zur spanenden Bearbeitung meißelkopfnäherer Endbereiche von Meißelhaltern ist stets Bestandteil der Instandsetzungsbaugruppe.

Die Dornachse der Vorrichtung der Instandsetzungsbaugruppe kann mit der Aufnahmeachse der Meißelaufnahmeöffnung bei in diese eingeführtem Positionierungsdorn kollinear sein. Dies ist insbesondere dann von Vorteil, wenn die Vorrichtung zur spanenden Bearbeitung einer meißelnäheren Endfläche des Meißelhalters vorgesehen ist, wobei nicht ausgeschlossen sein soll, dass mit der genannten Vorrichtung auch die Fase zwischen Endfläche des Meißelhalters und der Innenwandung seiner Meißelaufnahmeöffnung herstellbar ist. Dies ist insbesondere dann der Fall, wenn der Durchmesser des Zerspannwerkzeugs verhältnismäßig klein ist, kleiner als der Durchmesser der Meißelaufnahmeöffnung, und wenn der Abstand zwischen Dornachse und Werkzeugdrehachse klein ist, kleiner als der Radius der Meißelaufnahmeöffnung.

Alternativ kann die Dornachse bei in die Meißelaufnahmeöffnung eingeführtem Positionierungsdorn parallel zur Aufnahmeachse mit Abstand von dieser angeordnet sein. Mit dieser Ausgestaltung ist vorrangig eine Bearbeitung der Fase zwischen Stirnseite und Innenwandung der Meißelaufnahmeöffnung zu erzielen, wobei das Zerspanwerkzeug dann bevorzugt ein Fräser, insbesondere ein Konturfräser ist, um eine Fase mit axial unterschiedlichen Fasenwinkeln in möglichst einem Arbeitsgang erzeugen zu können.

Die vorliegende Anmeldung betrifft weiter eine Verwendung einer wie oben beschrieben aus- und weitergebildeten Vorrichtung zur Instandsetzung eines verschleißbelasteten meißelkopfnäheren Endbereichs eines Meißelhalters, insbesondere Meißelwechselhalters, einer Straßenfräse mit einer längs einer Aufnahmeachse in den Meißelhalter hinein, vorzugsweise durch diesen hindurch, verlaufenden Meißelaufnahmeöffnung.

Die Verwendung der Vorrichtung kann dem Erzeugen einer eine Meißel-Einführmündung der Meißelaufnahmeöffnung einfassenden Endfläche mit vorbestimmter Endflächengestalt, insbesondere ebener Endflächengestalt, dienen. Ebenso kann die Verwendung einem Erzeugen einer Fase zwischen einer eine Meißel-Einführmündung der Meißelaufnahmeöffnung einfassenden Stirnfläche und einer Innenwandung der Meißelaufnahmeöffnung mit vorbestimmter Fasengestalt dienen.

Die vorliegende Erfindung wird nachfolgend anhand der beiliegenden Zeichnungen näher erläutert. Es stellt dar:
- Figur 1: eine perspektivische Ansicht eines ungleichmäßig um die Meißelaufnahmeöffnung verschlissenen Meißelwechselhalters in einem Tragkörper eines Meißelwechselhaltersystems,
- Figur 2: eine Längsschnittansicht durch den verschlissenen Meißelwechselhalter von Figur 1, verbunden mit einem Fräswalzengrundkörper,
- Figur 3: eine erste erfindungsgemäße Ausführungsform einer Vorrichtung zur spanenden Bearbeitung einer meißelkopfnäheren Endfläche eines Meißelhalters,
- Figur 4: eine Längsschnittansicht durch eine zweite Ausführungsform einer Vorrichtung zur spanenden Bearbeitung einer meißelkopfnäheren Endfläche eines Meißelhalters und
- Figur 5: eine Vorrichtung zur spanenden Bearbeitung einer Fase zwischen einer Endfläche und einer Innenwandung der Meißelaufnahmeöffnung eines Meißelhalters.

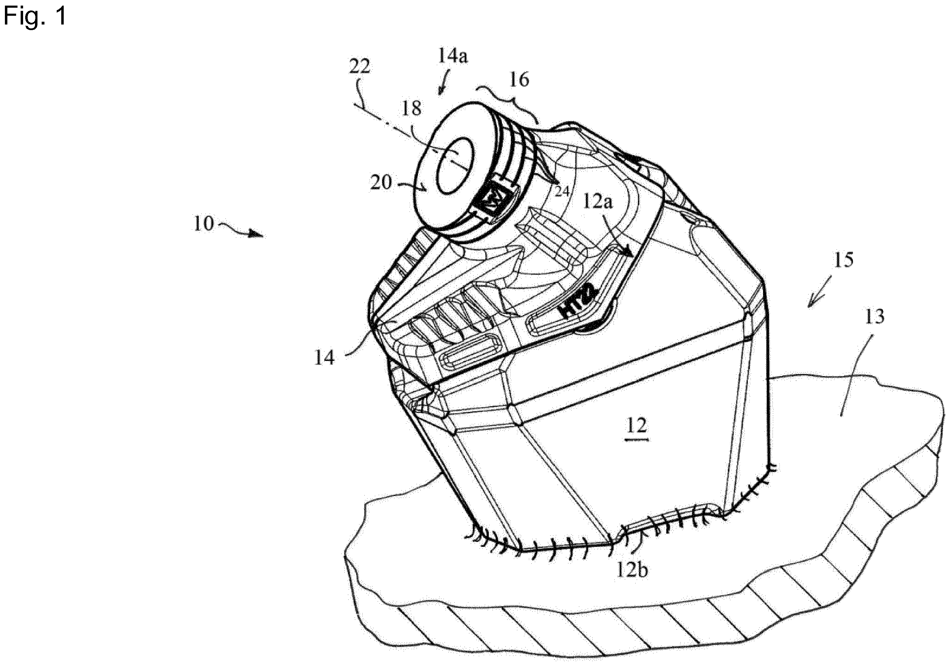

In Figur 1 ist in perspektivischer Ansicht ein Meißelwechselhaltersystem vom Typ "HT22" der Anmelderin allgemein mit 10 bezeichnet. Dieses umfasst als Basisteil einen Tragkörper 12, welcher auf einer Seite 12a zur Aufnahme eines Meißelwechselhalters 14 ausgebildet ist, und welcher an seiner vom Meißelwechselhalter 14 entgegengesetzten Seite 12b zur stoffschlüssigen Verbindung mit einem grobschematisch dargestellten zylindrischen Fräswalzengrundkörper 13 ausgebildet ist. Der Tragkörper 12 ist daher üblicherweise an den Fräswalzengrundkörper 13 angeschweißt und gestattet die Auswechslung von Meißelwechselhaltern 14.

Der Meißelwechselhalter 14 weist einen hülsenförmigen Abschnitt 16 auf, in dem eine Meißelaufnahmeöffnung 18 ausgebildet ist, welche im dargestellten Beispiel kreiszylindrisch ausgebildet ist, den Meißelwechselhalter 14 vorzugsweise vollständig durchsetzt und in welcher bei bestimmungsgemäßer Herrichtung zum Fräsbetrieb ein Meißelschaft eines an sich bekannten Rundschaftmeißels (in den Figuren nicht dargestellt) aufgenommen ist.

Die Meißelaufnahmeöffnung 18 ist an dem einem Meißelkopf näheren Ende 14a des Meißelwechselhalters 14 durch eine vollständig um die Meißelaufnahmeöffnung 18 umlaufende Endfläche bzw. Stirnfläche 20 umgeben.

Die Endfläche 20 liegt üblicherweise einer Verschleißscheibe (in den Figuren nicht dargestellt) gegenüber, welche zwischen dem Meißelkopf und der Stirnfläche 20 des Meißelwechselhalters 14 angeordnet ist.

Im vorliegenden Beispiel ist die Endfläche 20 des Meißelwechselhalters 14 durch Verschleiß erzeugt, nämlich durch körniges Material, welches beim Abfräsen von Fahrbahnbelägen entsteht und zwischen Meißelkopf bzw. Verschleißscheibe und die Endfläche 20 gelangt. Durch die beim Fräsbetrieb auf den Fräsmeißel und damit auch auf den Meißelwechselhalter 14 einwirkenden großen Betriebskräfte und durch die um die mit der Aufnahmeachse 22 zusammenfallende Schaftachse bestehende Drehbarkeit des Fräsmeißels oder/und der Verschleißscheibe relativ zum Meißelwechselhalter 14 wirken die zwischen Meißelkopf oder/und Verschleißscheibe einerseits und Endfläche 20 des Meißelwechselhalters 14 andererseits eintretenden zum Teil mineralischen oder/und keramischen körnigen Bestandteile des Materialabtrags stark abrasiv sowohl auf die Verschleißscheibe als auch auf den die Endfläche 20 aufweisenden Abschnitt 16 des Meißelwechselhalters 14. Die Verschleißscheibe wird beim Fräsbetrieb zum Schutz des Meißelkopfes geopfert. Der unvermeidliche Verschleiß des meißelkopfnäheren Endes des Meißelwechselhalters 14 ist zunächst hinzunehmen.

Zur Quantifizierung der Verschleißes des Meißelwechselhalters von seiner ursprünglichen Stirnfläche 20 her längs der Aufnahmeachse 22 sind in dem hülsenförmigen Abschnitt 16 in vorbestimmtem Abstand von beispielsweise 5 mm Verschleißmarken 24 vorgesehen, beispielsweise als umlaufende Rillenvertiefungen, anhand derer der Verschleiß eines Meißelwechselhalters 14 quantitativ bewertet werden kann.

Da die Verschleißmarken 24 jeweils in orthogonal zur Aufnahmeachse 22 orientierten Ebenen gelegen sind, ist in Figur 1 der ungleichmäßige Verschleiß der Endfläche 20 bzw. des meißelkopfnäheren Endes 14a des Meißelwechselhalters 14 erkennbar.

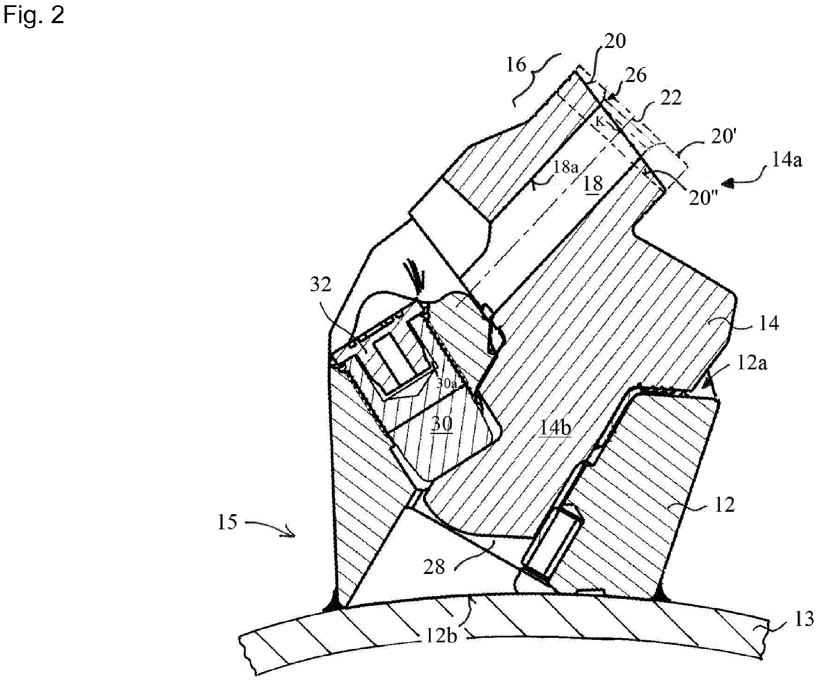

In Figur 2 ist das an sich bekannte Meißelwechselhaltersystem 10 mit dem es tragenden Fräswalzengrundkörper 13 im Längsschnitt dargestellt, um den konstruktiven Aufbau insbesondere des Meißelwechselhalters 14 zu erläutern. Der Fräswalzengrundkörper 13 und eine Mehrzahl von Meißelwechselhaltersystemen 10 bilden eine an sich bekannte Fräswalze 15 einer Straßenfräse.

Strichliniert ist die ursprüngliche unverschlissene Gestalt des meißelnäheren Längsendes 14a des Meißelwechselhalters 14 und damit des hülsenförmigen Abschnitts 16 dargestellt.

Zwischen der ursprünglich, d. h. vor dem Erstgebrauch des Meißelwechselhalters 14, bestehenden Endfläche 20' und einer Innenwandung 18a der Meißelaufnahmeöffnung 18 ist im fabrikneuen Zustand des Meißelwechselhalters 14 eine Fase 26 als Einführhilfe zur Einführung eines Meißelschaftes in die Meißelaufnahmeöffnung 18 längs der Aufnahmeachse 22 ausgebildet. Die Fase 26 kann zwei axial aufeinanderfolgende Abschnitte unterschiedlichen Fasenwinkels aufweisen.

Der Meißelwechselhalter 14 weist einen Wechselhalterschaft 14b auf, welcher in eine Schaftaufnahmeöffnung 28 des Tragkörpers 12 eingeführt und dort mittels eines Sicherungs-Gewindestifts 30 in an sich bekannter Weise formschlüssig gegen Auszug aus der Schaftaufnahmeöffnung 28 gesichert ist. Die Werkzeugeingriffsformation 30a des Sicherungs-Gewindestifts 30 ist durch einen Stopfen 32 gegen Schmutzeintritt im Fräsbetrieb geschützt, um einen Werkzeugangriff an dem Sicherungs-Gewindestift 30 auch nach einem Fräsbetrieb und damit die Lösbarkeit des Meißelwechselhalters 14 aus dem Tragkörper 12 sicherstellen zu können.

Durch Verschleiß des meißelkopfnäheren Endes 14a des Meißelwechselhalters 14 während des Fräsbetriebs wurde die ursprüngliche Endfläche 20' längs der Aufnahmeachse 22 zur nun bestehenden Endfläche 20 verlagert. Darüber hinaus wurde die Endfläche 20 gegenüber der ursprünglich vorgesehenen unverschlissenen Endfläche 20' um eine zur Aufnahmeachse 22 und zur Zeichenebene von Figur 2 orthogonale Kippachse K verkippt.

Der in Figur 2 im Längsschnitt gezeigte verschlissene Meißelwechselhalter 14 muss nicht notwendigerweise gegen einen neuen Meißelwechselhalter 14 ausgetauscht werden, sondern kann durch spanende Bearbeitung seines meißelkopfnäheren Endbereichs 14a wieder für einen weiteren Fräsbetrieb instand gesetzt werden. Hierzu ist im dargestellten Beispiel die Endfläche 20 wieder auf eine zur Aufnahmeachse 22 orthogonale ebene Lage zurückzunehmen, wie sie etwa durch die strichlinierte instandgesetzte Stirnfläche 20" in Figur 2 dargestellt ist. Die Stirnfläche 20" ist nach spanender Bearbeitung des Endbereichs 14a eben und orthogonal zur Aufnahmeachse 22 ausgebildet.

Die nachfolgend vorgeschlagenen Vorrichtungen dienen der oben beschriebenen notwendigen Instandsetzung des Meißelwechselhalters 14.

Durch die aufgrund der spanenden Bearbeitung unvermeidliche Verkürzung des hülsenförmigen Bereichs 16 weist ein in den instandgesetzten Meißelwechselhalter 14 eingesetzter Rundschaftmeißel einen gegenüber seiner Verwendung in einem typgleichen fabrikneuen Meißelwechselhalter 14 etwa um den Abstand der Endflächen 20' und 20" verkürzten Schnittkreisradius auf.

Es besteht daher grundsätzlich die Möglichkeit, verschlissene Meißelwechselhalter 14 hinsichtlich ihres Verschleißzustands zu untersuchen und gegebenenfalls hinsichtlich ihres Verschleißbetrags oder/und hinsichtlich ihres Schnittkreisradius oder Schnittkreisdurchmessers nach Instandsetzung zu klassifizieren und eine Fräswalze mit instandgesetzten Meißelwechselhaltern 14 der gleichen Klassifizierungsklasse auszurüsten. Die so erhaltene Fräswalze hätte zwar einen kleineren Schnittkreisdurchmesser als eine mit fabrikneuen Meißelwechselhaltern 14 ausgerüstete baugleiche Fräswalze, jedoch sind durch die zuvor erfolgte Klassifizierung der verringerten Schnittkreisdurchmesser über die Fräswalze hinweg einheitlich. Die so instandgesetzte Fräswalze kann unter Berücksichtigung ihres verringerten Schnittkreisdurchmessers wie eine fabrikneu ausgerüstete Fräswalze eingesetzt werden. Der verringerte Schnittkreisdurchmesser muss bei der Einstellung der Frästiefe berücksichtigt werden.

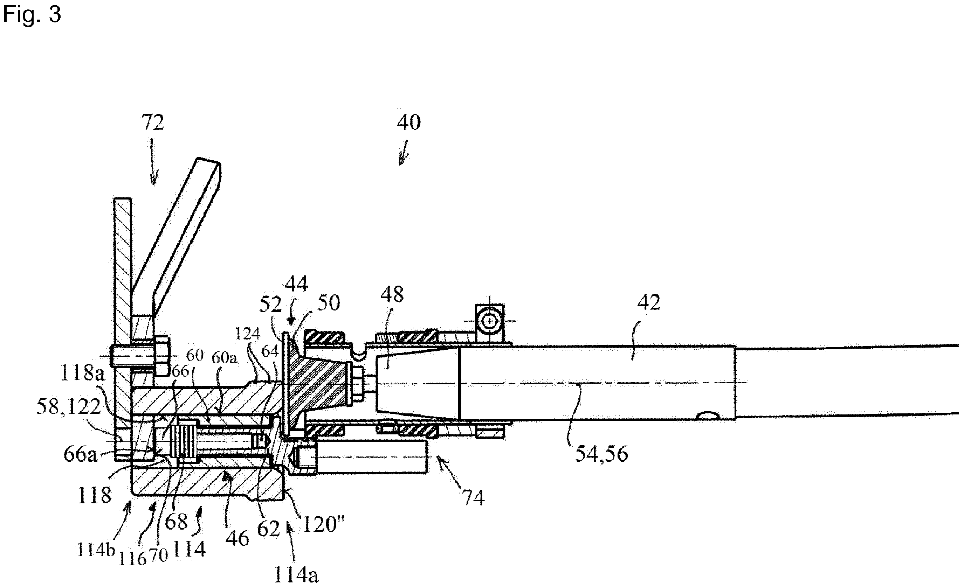

In Figur 3 ist im Teil-Längsschnitt eine erste Ausführungsform einer erfindungsgemäßen Vorrichtung zur spanenden Bearbeitung des meißelnäheren Endbereichs eines Meißelhalters gezeigt, und zwar als Instandsetzungsbaugruppe zusammen mit dem instandzusetzenden Meißelhalter.

Bei dem in Figur 3 dargestellten Meißelhalter handelt es sich nicht um einen Meißelwechselhalter 14, wie er in den Figuren 1 und 2 dargestellt ist, sondern um eine abweichende Ausführungsform eines Meißelhalters, dessen gleiche und funktionsgleiche Bauteilabschnitte mit gleichen Bezugszeichen wie in den Figuren 1 und 2 am Beispiel des Meißelwechselhalters versehen sind, jedoch erhöht um die Zahl 100.

Der Meißelhalter 114 aus Figur 3 ist ausschließlich gebildet aus einem rohrförmigen Abschnitt 116 und wird mit seiner Außenfläche in eine entsprechend ausgeformte Ausnehmung am Fräswalzengrundkörper eingeschweißt. Der Meißelhalter 114 ist daher bestimmungsgemäß unlösbar mit dem Fräswalzengrundkörper verbunden und muss schweißtechnisch von diesem getrennt werden.

Figur 3 zeigt den Meißelhalter 114 mit nahezu fertig bearbeiteter Endfläche 120".

Diese Bearbeitung erfolgt durch eine Vorrichtung 40, welche einen Drehantrieb 42, ein Zerspanwerkzeug 44 und einen Positionierungsdorn 46 aufweist. Das Zerspanwerkzeug 44 befindet sich dabei zwischen dem Drehantrieb 42 bzw. seinem Ausgangsglied 48 in Form eines Spannfutters und dem Positionierungsdorn 46.

Das Zerspanwerkzeug 44 ist ein Planschleifwerkzeug und weist einen Schleifscheibenträger 50 mit einer daran vorgesehenen Schleifscheibe 52 auf. Das Ausgangsglied 48 des Drehantriebs 42 ist um eine Antriebsdrehachse 54 drehbar, die mit der Werkzeugdrehachse 56 kollinear ist, um welche das Planschleif-Zerspanwerkzeug 44 in dem in Figur 3 gezeigten mit dem Drehantrieb 42 gekoppelten Zustand drehbar ist, um an der Schleifscheibe 52 spanabhebende Schneidkräfte zu erzeugen.

Der Positionierungsdorn 46 erstreckt sich längs einer Dornachse 58, welche in dem in Figur 3 gezeigten Zustand, in dem der Positionierungsdorn 46 in die Meißelaufnahmeöffnung 118 eingeführt ist, kollinear mit der Aufnahmeachse 122 ist.

Der Positionierungsdorn 46 weist eine hülsenförmige Anlagebauteilanordnung 60 auf, an deren Außenseite 60a ein Anlageabschnitt ausgebildet ist, welcher flächig an der Innenwandung 118a der Meißelaufnahmeöffnung 118 anliegt. Der Anlageabschnitt 60a läuft geschlossen um die Dornachse 58 um und erstreckt sich in axialer Richtung bezogen auf die Dornachse 58 um mehr als den Wert des Durchmessers des Positionierungsdorns 46, bevorzugt um mehr als das Doppelte des Durchmessers.

Radial innerhalb der Anlagebauteilanordnung 60 befindet sich eine Dornkernanordnung 62, welche relativ zur Anlagebauteilanordnung 60 um die Dornachse 58 drehbar ist. Die Drehbarkeit der Dornkernanordnung 62 relativ zur Anlagebauteilanordnung 60 um die Dornachse 58 ist der einzige Relativbewegungsfreiheitsgrad der Dornkernanordnung 62 relativ zur Anlagebauteilanordnung 60. Der Positionierungsdorn 46 kann jedoch auch als Ganzes relativ zum Meißelhalter 114 um die Aufnahmeachse 122 drehbar sein.

In eine zentrale Ausnehmung 64 der Dornkernanordnung 62 ist eine Schraube 66 eingedreht, wobei zwischen dem Schraubenkopf der Schraube 66 und der Dornkernanordnung 62 eine Mehrzahl von Unterlegscheiben 68 angeordnet ist, um eine stirnseitige Endfläche 66a der Schraube 66 als mechanischen Anschlag des Positionierungsdorns 46 nutzen zu können. Die Schraube 66 wirkt als Anschlag mit einer Gegenanschlagfläche 70 einer Spannvorrichtung 72 zusammen, welche dazu ausgebildet ist, den Meißelhalter 114 an seinem meißelkopfferneren Längsendbereich 114b zu spannen.

Das die Gegenanschlagfläche 70 tragende Bauteil der Spannvorrichtung 72 ist dabei ebenso in die Meißelaufnahmeöffnung 118 eingeführt wie der Positionierungsdorn 46, jedoch jeweils von unterschiedlichen Enden des Meißelhalters 114 her. Der Meißelhalter 114 kann abweichend von der Darstellung während der Instandsetzung durch die Vorrichtung 40 an einem Fräswalzengrundkörper angeordnet sein. Die Spannvorrichtung 72 kann auch in einen an einen Fräswalzengrundkörper angeschweißten Meißelhalter 114 eingeführt werden, um einen Gegenanschlag bereitzustellen.

Durch die Schraube 66 und die an ihr stirnseitig ausgebildete Anschlagfläche 66a ist eine axiale Zustellbewegung der Vorrichtung 40 längs der Dornachse 58 einstellbar.

Der Drehantrieb 42 zusammen mit seinem Ausgangsglied 48 (Spannfutter) und das damit gekoppelte Zerspanwerkzeug 44 sind über einen Werkzeugträger 74 mit der Dornkernanordnung 62 des Positionierungsdorns 46 verbunden.

Die Gestalt der Vorrichtung 40 ist in der in Figur 3 gezeigten Ausführungsform derart, dass die Werkzeugdrehachse 56 parallel zur Dornachse 58, jedoch mit Versatz zu dieser angeordnet ist. Dies ermöglicht eine Bearbeitung der Endfläche 120 bzw. 120" mit geometrisch unbestimmter Schneide und gebundenem Korn im unterbrochenen Schnitt.

Eine Vorschubbewegung in Umfangsrichtung um die Dornachse 58 kann manuell erzeugt werden, indem die Dornkernanordnung 62 mitsamt Werkzeugträger 74 und damit Drehantrieb 42 und Zerspanwerkzeug 44 um die Dornachse 58 relativ zur Anlagebauteilanordnung 60 gedreht wird. Somit kann die Stirnfläche 120 bzw. 120" längs ihres gesamten Umfangs um die Dornachse bearbeitet werden. Durch den axial langen und in Umfangsrichtung geschlossen um die Dornachse 58 umlaufenden Anlageabschnitt 60a ist die Dornachse 58 in ihrer kollinearen Lage bezüglich der Aufnahmeachse 122 bei in die Aufnahmeöffnung 118 eingeführtem Positionierungsdorn 46 eindeutig und sicher bestimmt. Durch den Werkzeugträger 74 ist die Lage der Antriebsdrehachse 54 und mit dieser die Lage der Werkzeugdrehachse 56 eindeutig bestimmt. Der Drehantrieb 42 ist relativ zum Werkzeugträger 74 unbeweglich durch Verklemmen mit diesem verbunden.

Unter Verwendung der Anschlagfläche 66a kann so eine Vielzahl von gleichartigen Werkzeughaltern 114 spanend auf ein einheitliches Längenmaß bearbeitet und somit nach dem oben geschilderten Verschleiß wieder instand gesetzt werden.

Aufgrund der oben beschriebenen Achslage der Vorrichtung 40 von Figur 3 ist die Vorrichtung 40 insgesamt schlank, d. h. ihre Ausdehnung längs der verlängert gedachten Dornachse 58 ist wesentlich größer als orthogonal hierzu.

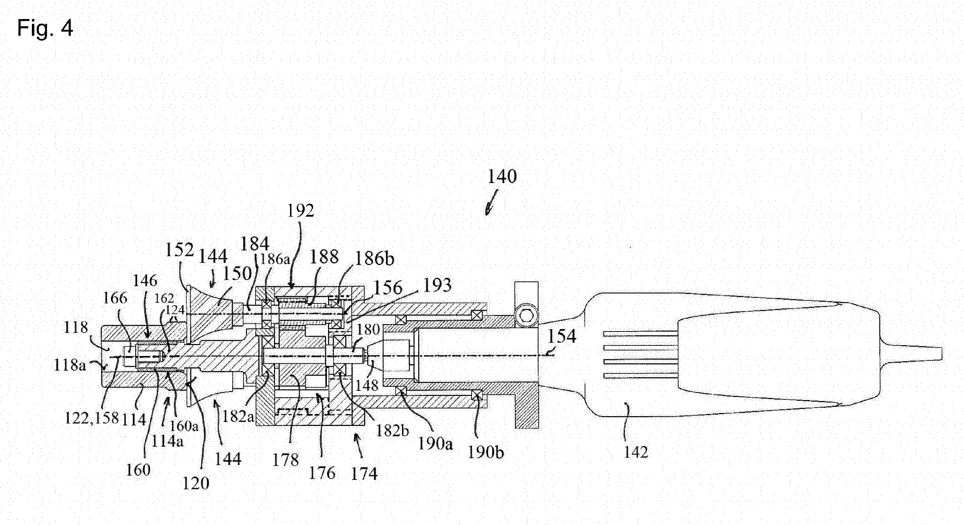

In Figur 4 ist eine zweite erfindungsgemäße Ausführungsform einer Vorrichtung 140 zur spanenden Bearbeitung von verschleißbelasteten meißelkopfnäheren Endbereichen 114a von Meißelhaltern 114 von Straßenfräsen gezeigt.

Gleiche und funktionsgleiche Bauteile und Bauteilabschnitte wie an der Vorrichtung 40 von Figur 3 sind mit gleichen Bezugszeichen versehen, jedoch erhöht um die Zahl 100. Der Werkzeughalter 114 von Figur 4 entspricht jenem von Figur 3 und wird nicht näher erläutert. Zu dessen Beschreibung wird ausdrücklich auf die zur Figur 3 abgegebene Beschreibung des Meißelhalters 114 verwiesen. Die Spannsituation des Meißelhalters 114 ist die gleiche wie in Figur 3, sie ist der Übersichtlichkeit halber in Figur 4 jedoch nicht dargestellt.

Die Ausführungsform der Vorrichtung 140 von Figur 4 wird nachfolgend nur insofern beschrieben, als sie sich von der Ausführungsform von Figur 3 unterscheidet, auf deren Beschreibung ansonsten ausdrücklich auch zur Erläuterung der Vorrichtung 140 von Figur 4 verwiesen wird.

Ein erster Unterschied zwischen der ersten und der zweiten Ausführungsform der Vorrichtungen 40 bzw. 140 besteht darin, dass die Vorrichtung 140 eine Mehrzahl von, nämlich im dargestellten Beispiel genau drei, Zerspanwerkzeugen 144 aufweist. Die Zerspanwerkzeuge 144 mit ihren jeweiligen Werkzeugdrehachsen 156 sind winkel-äquidistant um die Dornachse 158 herum angeordnet. Die Werkzeugdrehachsen 156 sind jeweils parallel zur Dornachse 158 und haben von dieser jeweils den gleichen Abstand. Der Winkelabstand zwischen zwei um die Dornachse 158 unmittelbar benachbarten Werkzeugdrehachsen 156 beträgt folglich 120°.

Abweichend von der ersten Ausführungsform der Vorrichtung 40 von Figur 3 sind die Werkzeugdrehachsen 156 auch parallel zur, jedoch mit Abstand von der Antriebsdrehachse 154 des Drehantriebs 142 angeordnet.

Zur Drehmomentübertragung zwischen dem Drehantrieb 142 und der Mehrzahl von Zerspanwerkzeugen 144 ist im Drehmomentpfad zwischen dem Drehantrieb 142 und den Zerspanwerkzeugen 144 ein Getriebe 176 angeordnet.

Das Getriebe 176 umfasst ein zentrales Zahnrad 178, welches zur gemeinsamen Drehung mit einer Zahnradwelle 180 verbunden ist, etwa durch Aufschrumpfen oder durch eine Keilwellenverbindung, wobei die Drehachse der Zahnradwelle 180 des zentralen Zahnrads 178 kollinear mit der Antriebsdrehachse 154 orientiert ist. Die Zahnradwelle 180 weist eine Eingriffsformation auf, welche mit dem Spannfutter 148 als dem Ausgangsglied des Drehantriebs 142 zur gemeinsamen Drehung gekoppelt ist. Die Zahnradwelle 180 ist über zwei Wälzlager 182a und 182b drehbar im Werkzeugträger 174 gelagert.

Jedes Zerspanwerkzeug 144 ist mit einer Werkzeugwelle 184 zur gemeinsamen Drehung gekoppelt, die durch Wälzlager 186a und 186b um die jeweilige Werkzeugdrehachse 156 drehbar im Werkzeugträger 174 gelagert ist.

Mit jeder Werkzeugwelle 184 ist jeweils ein Werkzeugzahnrad 188 zur gemeinsamen Drehung verbunden, beispielsweise durch Aufschrumpfen oder durch Keilverzahnung, welches mit dem zentralen Zahnrad 178 kämmt. Jedes Zerspanwerkzeug 144 ist hinsichtlich Lagerung und Drehantrieb identisch ausgebildet. Somit kann durch den Drehantrieb 142 jedes Zerspanwerkzeug 144 mit gleichem Drehmoment und gleicher Drehgeschwindigkeit zur Rotation um die jeweilige Werkzeugdrehachse 156 angetrieben werden. Dies ermöglicht wiederum eine gleichmäßige Bearbeitung der Stirnfläche 120 des Werkzeughalters 114 im unterbrochenen Schnitt mit geometrisch unbestimmter Schneide und gebundenem Korn. Durch das Vorsehen von einer Mehrzahl von Zerspanwerkzeugen 144 ist das pro Zeiteinheit abtragbare Zerspanvolumen der Vorrichtung 140 jedoch größer als jenes der Vorrichtung 40 von Figur 3.

Der Werkzeugträger 174 kann relativ zum Drehantrieb 142 um die zur Antriebsdrehachse 154 kollineare Drehachse der Zahnradwelle 180 drehbar gelagert sein, beispielsweise durch Wälzlager 190a und 190b. Somit kann durch manuelles Drehen des Werkzeugträgers 174 relativ zum Drehantrieb 142 eine Vorschubbewegung der Zerspanwerkzeuge 144 in Umfangsrichtung um die Dornachse 158 bewirkt werden.

Alternativ hierzu kann der Werkzeugträger 174 auch drehfest mit dem Drehantrieb 142 gekoppelt sein und kann ein Abschnitt 192 des Werkzeugträgers 174, welcher die Zahnräder 178 und 188 umgibt, als Hohlrad ausgebildet sein, welches ebenfalls mit den Werkzeugzahnrädern 188 kämmt.

In diesem Falle ist das Getriebe 176 ein Planetengetriebe, in welchem das zentrale Zahnrad 178 das Sonnenrad ist, in welchem die Werkzeugzahnräder 188 die Planetenräder sind, und in welchem der Abschnitt 192 das antriebsfeste Hohlrad bildet. Die Planetenräder 188 müssen selbstverständlich auf einem Planetenradträger 193 gelagert sein, welcher relativ zum Sonnenrad 178 und relativ zum Hohlrad um die zentrale Achse 154, 158 des Planetenradgetriebes drehbar ist.

Bei Verwendung des beschriebenen Planetengetriebes wird mit dem Drehantrieb 142 durch Drehantrieb des Sonnenrades 178 nicht nur die Rotation der Zerspanwerkzeuge 144 um ihre Werkzeugdrehachsen 156 bewirkt, sondern auch eine Drehbewegung des Planetenradträgers 193 und damit eine Vorschubbewegung der jeweiligen Zerspanwerkzeuge 144 um die Dornachse 158 herum.

Wiederum ist der Positionierungsdorn 146 fest mit dem Werkzeugträger 174 verbunden, welcher mehrteilig ausgebildet sein kann, um seine Fertigung und Montage zu erleichtern.

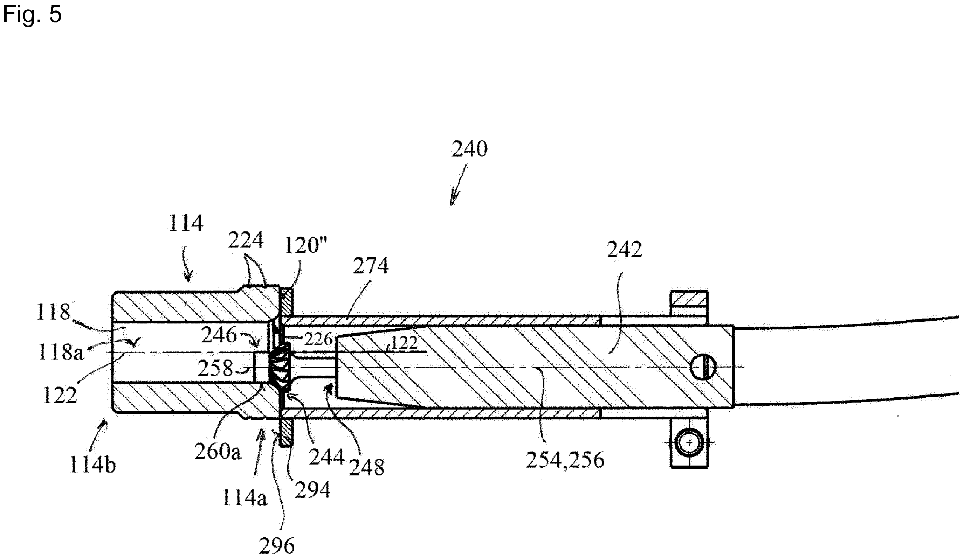

In Figur 5 ist eine weitere Ausführungsform 240 einer erfindungsgemäßen Vorrichtung zur spanenden Bearbeitung von verschleißbelasteten meißelkopfnäheren Endbereichen 114a von Meißelhaltern 114 von Straßenfräsen dargestellt.

Gleiche und funktionsgleiche Bauteile und Bauteilabschnitte wie in den Figuren 3 und 4 sind an der Vorrichtung 240 mit gleichen Bezugszeichen versehen, jedoch erhöht und die Zahl 100 bzw. 200.

Der Werkzeughalter 114 von Figur 5 ist mit den Werkzeughaltern 114 der Figuren 3 und 4 identisch.

Nachfolgend wird die Ausführungsform von Figur 5 nur insofern erläutert werden, als sie sich von den vorhergehenden Ausführungsformen unterscheidet, auf deren Beschreibung ansonsten zur Erläuterung auch der Ausführungsform von Figur 5 ausdrücklich verwiesen wird.

Die Vorrichtung 240 in Figur 5 dient der Herstellung der Fase 226 durch ein Zerspanwerkzeug 244 in Form eines Profilfräsers.

Die Herstellung der Fase 226 erfolgt nach Fertigstellung der gewünschten Stirnfläche 120", sodass diese als weitere Bezugs- und Anlagefläche für die spanende Herstellung der Fase 226 dienen kann.

Der Positionierungsdorn 246 ist vorliegend zum einen integral mit dem Zerspanwerkzeug 244 ausgebildet und steht auf der vom Drehantrieb 242 weg weisenden Seite des Schneidenbereichs des Zerspanwerkzeugs 244 von dem Schneidenbereich ab.

Der Positionierungsdorn 246 ist im Durchmesser kleiner als der Durchmesser der Meißelaufnahmeöffnung 118, etwa halb so groß, und liegt deshalb nur längs eines dornachsenparallelen Anlageabschnitts 260a linienhaft an der Innenwandung 118a der Meißelaufnahmeöffnung 118 an. Da der Positionierungsdorn 246 integral mit dem Zerspanwerkzeug 244 ausgebildet ist, rotiert dieser mit dem Zerspanwerkzeug um die Werkzeugdrehachse 256 mit.

Der Positionierungsdorn 246 befindet sich daher in einem Gleitanlageeingriff mit der Innenwandung 118a im Anlageabschnitt 260a.

Außerdem ist die axiale Länge längs der Dornachse 258 des Positionierungsdorns 246 kürzer als sein Durchmesser orthogonal zur Dornachse 258. Daher kann mit dem Positionierungsdorn 246 zwar die Lage der Dornachse 258 relativ zum Anlageabschnitt 260a, nicht jedoch deren winkelmäßige Orientierung relativ zur Aufnahmeachse 122 der Werkzeugaufnahmeöffnung 118 für die Fräsbearbeitung ausreichend genau definiert werden.

Um diesen Definitionsmangel auszugleichen, weist die Vorrichtung 240 eine drehantriebsfeste Ausrichtscheibe 294 mit einer axial bezogen auf die Werkzeugdrehachse 256, die Antriebsdrehachse 254 oder die Dornachse 258 vom Drehantrieb 242 weg und zum Meißelhalter 114 hin weisenden Ausrichtfläche 296 auf. Die Ausrichtfläche 296 ist im dargestellten Beispiel eben und orthogonal zu den Drehachsen 254 und 286 sowie zur Dornachse 258 orientiert, damit sie flächig an die fertig bearbeitete Endfläche 120" anlegbar ist. Durch Anlage der Ausrichtfläche 296 auf die fertig bearbeitete Endfläche 120" kann die Winkelorientierung der Werkzeugdrehachse 256 relativ zur Aufnahmeachse 122 genau eingestellt werden, sodass die Ausrichtfläche 296 zusammen mit dem axial kurzen Positionierungsdorn 246 für eine eindeutige Lage des Zerspanwerkzeugs 144 bezogen auf die Werkzeugaufnahmeöffnung 118 und ihre Aufnahmeachse 122 sorgt.

Die Vorrichtung 240 ist eine manuell zu bewegende Vorrichtung, d. h. das Zerspanwerkzeug 244 wird unter Aufrechterhaltung der Anlagebeziehung der Ausrichtfläche 296 mit der fertig bearbeiteten Stirnfläche 120" um die Aufnahmeachse 122 herum bewegt, bis die Fase 226 fertig bearbeitet ist.

In der Vorrichtung 240 sind die Werkzeugdrehachse 256 und die Antriebsdrehachse 254 kollinear. Zu diesen ist weiter die Dornachse 258 kollinear. Die Achsen 254, 256 und 258 sind bei korrekter Anlage der Ausrichtfläche 296 an die fertig bearbeitete Endfläche 120" einerseits und des Positionierungsdorns 246 an die Innenwand 118a der Aufnahmeöffnung 118 andererseits parallel zur Aufnahmeachse, jedoch versetzt zu dieser angeordnet. Auch dies ermöglicht den vorteilhaften, weil die beteiligten Schneiden nicht überhitzenden Schneideingriff mit unterbrochenem Schnitt.

Bei Betrachtung der Instandsetzungsbaugruppen der Figuren 3, 4 und 5, also der Vorrichtung 40, 140 bzw. 240 zusammen mit dem durch die Vorrichtung zu bearbeitenden Meißelhalter 114 gilt für jede dieser Ausführungsform, dass wenigstens die Werkzeugdrehachse 56, 156, 256 stets im bearbeitungsbereiten Zustand parallel zur Aufnahmeachse 122 des Werkzeughalters 114, jedoch versetzt zu dieser angeordnet ist.

## Patentansprüche

1. Verfahren zur Instandsetzung einer Fräswalze (15) einer Straßenfräse mit einer Mehrzahl von Meißelhaltern (14;114), welche jeweils dazu ausgebildet sind, einen sich längs einer Schaftachse erstreckenden Fräsmeißelschaft eines Fräsmeißels, der den Fräsmeißelschaft und einen mit diesem verbundenen Meißelkopf mit Meißelspitze aufweist, in einer sich längs einer Aufnahmeachse (22; 122) erstreckenden Meißelaufnahmeöffnung (18; 118) aufzunehmen, wobei wenigstens ein Teil der Meißelhalter (14; 114) jeweils einen verschlissenen meißelkopfnäheren Endbereich (14a; 114a) aufweist, der einen meißelkopfnäheren Endabschnitt der Meißelaufnahmeöffnung (18; 118) umgibt und der eine im Fräsbetrieb dem Meißelkopf zugewandte Endfläche (20, 20', 20"; 120, 120', 120") aufweist, wobei das Verfahren die folgenden Schritte umfasst:
- Ermitteln eines meißelhalterbezogenen Verschleißzustands der Fräswalze (15), und
- Bereitstellen der Fräswalze (15) mit Meißelhaltern (14; 114), deren jeweilige im Fräsbetrieb dem Meißelkopf zugewandte Endfläche (20, 20', 20"; 120, 120', 120"), verglichen mit dem unverschlissenen Zustand der Meißelhalter (14; 114) an jeweils derselben Meißelhalterposition vor Aufnahme des verschleißbegründenden Fräsbetriebs, längs der Aufnahmeachse (22; 122) abhängig von dem ermittelten Verschleißzustand verlagert ist,
**dadurch gekennzeichnet, dass** das Bereitstellen der Fräswalze (15) mit Meißelhaltern (14; 114) mit längs der Aufnahmeachse verlagerten Endflächen (20"; 120") eine spanende Bearbeitung an den meißelkopfnäheren Endbereichen (14a; 114a) der Meißelhalter (14; 114) mit längs der Aufnahmeachse verlagerten Endflächen (20"; 120") umfasst.

2. Verfahren nach Anspruch 1,
**dadurch gekennzeichnet, dass** die spanende Bearbeitung von der im Fräsbetrieb zum Meißelkopf hinweisenden Endfläche (20, 20', 20"; 120, 120', 120") des meißelkopfnäheren (14a; 114a) Endbereichs längs der Aufnahmeachse (22; 122) erfolgt, oder/und
**dadurch gekennzeichnet, dass** die spanende Bearbeitung von Meißelhaltern (14; 114) erfolgt, während diese mit einem Fräswalzengrundkörper (13) der Fräswalze (15) verbunden sind.

3. Verfahren nach einem der vorhergehenden Ansprüche,
**dadurch gekennzeichnet, dass** das Ermitteln des meißelhalterbezogenen Verschleißzustands ein Ermitteln des Meißelhalters (14; 114) oder einer Gruppe von Meißelhaltern (14; 114) mit maximal verschlissenen meißelkopfnäheren Endbereich (14a; 114a) umfasst, wobei insbesondere durch die spanende Bearbeitung des meißelkopfnäheren Endbereichs (14a; 114a) eines Meißelhalters (14; 114) dessen Endfläche (20, 20', 20"; 120, 120', 120") bezogen auf ihre Lage im ursprünglichen unverschlissenen Zustand um wenigstens den Betrag längs der Aufnahmeachse (22; 122) verlagert wird, um welchen die Endfläche (20, 20', 20"; 120, 120', 120") des Meißelhalters (14; 114) mit dem maximal verschlissenen meißelkopfnäheren Endbereich (14a; 114a) bezogen auf ihre Lage im ursprünglichen unverschlissenen Zustand durch Verschleiß längs der Aufnahmeachse (22; 122) verlagert wurde.

4. Vorrichtung (40; 140; 240) zur spanenden Bearbeitung von verschleißbelasteten meißelkopfnäheren Endbereichen (14a; 114a) von Meißelhaltern (14; 114) von Straßenfräsen, welche Vorrichtung ausgebildet ist für die Ausführung des Instandsetzungsverfahrens nach einem der vorhergehenden Ansprüche, wobei die Vorrichtung (40; 140; 240) umfasst:
- einen Drehantrieb (42; 142; 242) mit einem sich um eine Antriebsdrehachse (54; 154; 254) drehenden Ausgangsglied (48; 148; 248),
- wenigstens ein um eine Werkzeugdrehachse (56; 156; 256) drehbares Zerspanwerkzeug (44; 144; 244), welches zur gemeinsamen Drehung mit dem Ausgangsglied (48; 148; 248) gekoppelt oder koppelbar ist,
- einen sich längs einer Dornachse (58; 158; 258) erstreckenden Positionierungsdorn (46; 146; 246), welcher zur Einführung in eine Meißelaufnahmeöffnung (18; 118) eines Meißelhalters (14; 114) ausgebildet ist und welcher einen radial von der Dornachse (58; 158; 258) entfernt gelegenen und in eine Richtung mit radialer Komponente von der Dornachse (58; 158; 258) wegweisenden Anlageabschnitt (60a; 160a; 260a) aufweist, der zur Anlage an eine Innenwandung (18a; 118a) der Meißelaufnahmeöffnung (18; 118) ausgebildet ist,
wobei ein mit Schneiden besetzter Zerspanbereich des Zerspanwerkzeugs (44; 144; 244) zwischen dem Positionierungsdorn (46; 146; 246) und dem Ausgangsglied (48; 148; 248) angeordnet ist.

5. Vorrichtung (40; 140) nach Anspruch 4,
**dadurch gekennzeichnet, dass** der zur Anlage an die Innenwandung (18a; 118a) der Meißelaufnahmeöffnung (18; 118) ausgebildete Anlageabschnitt (60a; 160a) eine Mehrzahl von in Umfangsrichtung um die Dornachse (58; 158) mit Abstand voneinander angeordnete Teil-Anlageabschnitte aufweist, bevorzugt um die Dornachse (58; 158) umläuft.

6. Vorrichtung (40; 140) nach Anspruch 4 oder 5,
**dadurch gekennzeichnet, dass** die Werkzeugdrehachse (56; 156) von der Dornachse (58; 158) verschieden ist, wobei bevorzugt die Werkzeugdrehachse (56; 156) parallel zur Dornachse (58; 158) und mit Abstand von dieser angeordnet ist.

7. Vorrichtung (40; 140) nach einem der vorhergehenden Ansprüche 4 bis 6, **dadurch gekennzeichnet, dass** das wenigstens eine Zerspanwerkzeug (44; 144) sowohl um die Werkzeugdrehachse (56; 156) als auch um die Dornachse (58; 158) drehbar ist.

8. Vorrichtung (40; 140) nach einem der Ansprüche 4 bis 7,
**dadurch gekennzeichnet, dass** der Positionierungsdorn (46; 146) mehrteilig ausgebildet ist, mit wenigstens einer bezogen auf die Dornachse (58; 158) radial weiter außen gelegenen Anlagebauteilanordnung (60; 160), welche den Anlageabschnitt (60a; 160a) aufweist, und mit einer radial weiter innen gelegenen Dornkernanordnung (62; 162), wobei Anlagebauteilanordnung (60; 160) und Dornkernanordnung (62; 162) bevorzugt relativ zu einander beweglich sind, insbesondere relativ zueinander um die Dornachse (58; 158) drehbar sind.

9. Vorrichtung (40; 140; 240) nach einem der vorhergehenden Ansprüche 4 bis 8,
**dadurch gekennzeichnet, dass** die Vorrichtung einen Werkzeugträger (74; 174; 274) aufweist, relativ zu welchem das wenigstens eine Zerspanwerkzeug (44; 144; 244) um die Werkzeugdrehachse (56; 156; 256) drehbar aber mit relativ zum Werkzeugträger (74; 174; 274) unverlagerbarer Werkzeugdrehachse (56; 156; 256) festgelegt ist, wobei insbesondere der Werkzeugträger (74; 174) mit dem Positionierungsdorn (46; 146) zur gemeinsamen Bewegung gekoppelt ist, wobei besonders bevorzugt der Werkzeugträger (74; 174) mit der Dornkernanordnung (62; 162) des Positionierungsdorns (46; 146) zur gemeinsamen Bewegung gekoppelt und relativ zur Anlagebauteilanordnung (60; 160) um die Dornachse (58; 158) drehbar ist.

10. Vorrichtung (140) nach einem der vorhergehenden Ansprüche 4 bis 9,
**dadurch gekennzeichnet, dass** das wenigstens eine Zerspanwerkzeug (144) mit von der Antriebsdrehachse 154) verschiedener Werkzeugdrehachse (156) angeordnet ist, wobei zwischen Ausgangsglied (148) und Zerspanwerkzeug (144) ein Drehmoment übertragendes Getriebe (176) vorgesehen ist, wobei insbesondere eine Mehrzahl von Zerspanwerkzeugen (144) vorgesehen ist, von denen jedes um eine Werkzeugdrehachse (156) drehbar ist, wobei das Getriebe (176) jedes Zerspanwerkzeug (144) aus der Mehrzahl von Zerspanwerkzeugen (144) Drehmoment übertragend mit dem Ausgangsglied (148) verbindet, wobei besonders bevorzugt das Getriebe (176) ein Planetengetriebe umfasst, wobei das Ausgangsglied (148) mit dem Sonnenrad (178) und jedes Zerspanwerkzeug (144) aus der Mehrzahl von Zerspanwerkzeugen (144) mit je einem Planetenrad (188) Drehmoment übertragend gekoppelt ist.

11. Vorrichtung (40; 140; 240) nach einem der vorhergehenden Ansprüche 4 bis 10,
**dadurch gekennzeichnet, dass** die Antriebsdrehachse (54; 154; 254) parallel zur Werkzeugdrehachse (156) und mit Abstand von dieser angeordnet ist oder kollinear mit der Werkzeugdrehachse (56; 256) angeordnet ist, oder/und **dadurch gekennzeichnet, dass** sie einen Anschlag (66; 166) zur Begrenzung einer längs der Dornachse (58; 158) erfolgenden Zustellbewegung aufweist, wobei der Anschlag (66; 166) bevorzugt am Positionierungsdorn (46; 146) ausgebildet ist, besonders bevorzugt an dem dem Zerspanwerkzeug (44; 144) ferner gelegenen Längsende des Positionierungsdorns (46; 146).

12. Vorrichtung (240) nach einem der Ansprüche 4, 5 oder 7 bis 11,
**dadurch gekennzeichnet, dass** die Werkzeugdrehachse (256) kollinear mit der Dornachse (258) ist, wobei insbesondere der Positionierungsdorn (246) integral mit dem Zerspanwerkzeug (244) ausgebildet ist, wobei insbesondere die Vorrichtung eine zur Werkzeugdrehachse (256) orthogonale Ausrichtfläche (294) aufweist, welche zur Anlage an eine eine Meißel-Einführmündung der Meißelaufnahmeöffnung (18; 118) einfassende Stirnfläche (20"; 120") des Meißelhalters (14; 114) ausgebildet ist.

13. Instandsetzungsbaugruppe, umfassend eine Vorrichtung (40; 140; 240) nach einem der vorhergehenden Ansprüche 4 bis 12 und weiter umfassend einen Meißelhalter (14; 114), insbesondere Meißelwechselhalter (114), einer Straßenfräse mit einer längs einer Aufnahmeachse (22; 122) in den Meißelhalter (14; 114) hinein, vorzugsweise durch diesen hindurch, verlaufenden Meißelaufnahmeöffnung (18; 118), wobei insbesondere die Vorrichtung (40; 140; 240) gemäß einem der Ansprüche 4 bis 11 unter Verwirklichung der Merkmale des Anspruchs 6 ausgebildet ist, wobei die Dornachse (58; 158) bei in die Meißelaufnahmeöffnung (18; 118) eingeführtem Positionierungsdorn (46; 146) kollinear mit der Aufnahmeachse (22; 122) angeordnet ist,
oder wobei insbesondere die Vorrichtung (240) gemäß Anspruch 12 ausgebildet ist, wobei die Dornachse (258) bei in die Meißelaufnahmeöffnung (118) eingeführtem Positionierungsdorn (246) parallel zur Aufnahmeachse (122) mit Abstand von dieser angeordnet ist.

14. Verwendung einer Vorrichtung (40; 140; 240) nach einem der Ansprüche 4 bis 12 zur Instandsetzung eines verschleißbelasteten meißelkopfnäheren Endbereichs (14a; 114a) eines Meißelhalters (14; 114), insbesondere Meißelwechselhalters (114), einer Straßenfräse mit einer längs einer Aufnahmeachse (22; 122) in den Meißelhalter (14; 114) hinein, vorzugsweise durch diesen hindurch, verlaufenden Meißelaufnahmeöffnung (18; 118).

15. Verwendung nach Anspruch 14,
**dadurch gekennzeichnet, dass** die Verwendung ein Erzeugen einer eine Meißel-Einführmündung der Meißelaufnahmeöffnung (18; 118) einfassenden Endfläche (20"; 120") mit vorbestimmter Endflächengestalt, insbesondere ebener Endflächengestalt, umfasst, oder/und
**dadurch gekennzeichnet, dass** die Verwendung ein Erzeugen einer Fase (26; 126) zwischen einer eine Meißel-Einführmündung der Meißelaufnahmeöffnung (18; 118) einfassenden Endfläche (20"; 120") und einer Innenwandung (18a; 118a) der Meißelaufnahmeöffnung (18; 118) mit vorbestimmter Fasengestalt umfasst.

## Claims

1. A method for overhauling a milling drum (15) of a road milling machine having a plurality of bit holders (14; 114) that are each embodied to receive a milling bit shank, extending along a shank axis, of a milling bit that comprises the milling bit shank and a bit head, having a bit tip, connected thereto, in a bit receptacle opening (18; 118) extending along a receptacle axis (22; 122), at least part of the bit holders (14; 114) respectively comprising a worn bit-head-proximal end region (14a; 114a) that surrounds a bit-head-proximal end segment of the bit receptacle opening (18; 118) and comprises an end surface (20, 20', 20"; 120, 120', 120") facing toward the bit head during milling operation, the method comprising the following steps:
- identifying a bit-holder-related wear state of the milling drum (15), and
- providing the milling drum (15) together with bit holders (14; 114) whose respective end surface (20, 20', 20"; 120, 120', 120") facing toward the bit head during milling operation is displaced, compared with the unworn state of the bit holder (14; 114) at the same respective bit holder position before the beginning of wear-causing milling operation, along the receptacle axis (22; 122) depending on the identified wear state,
**characterized in that** the providing of the milling drum (15) together with bit holders (14; 114) having end surfaces (20"; 120") displaced along the receptacle axis comprises metal-cutting machining at the bit-head-proximal end regions (14a; 114a) of the bit holders (14; 114) having end surfaces (20"; 120") displaced along the receptacle axis.

2. The method according to Claim 1,
**characterized in that** metal-cutting machining of that end surface (20, 20', 20"; 120, 120', 120") of the bit-head-proximal end region (14a; 114a) which faces toward the bit head during milling operation is accomplished along the receptacle axis (22; 122), or/and
**characterized in that** metal-cutting machining of bit holders (14; 114) is accomplished while they are attached to a milling drum base element (13) of the milling drum (15).

3. The method according to one of the preceding claims,
**characterized in that** the identification of the bit-holder-related wear state comprises an identification of the bit holder (14; 114), or of a group of bit holders (14; 114) having a maximally worn bit-head proximal end region (14a; 114a), wherein in particular as a result of metal-cutting machining of the bit-head-proximal end region (14a; 114a) of a bit holder (14; 114), its end surface (20, 20', 20"; 120, 120', 120") is displaced with reference to its location in the original unworn state by at least the amount along the receptacle axis (22; 122) by which the end surface (20, 20', 20"; 120, 120', 120") of the bit holder (14; 114) having the maximally worn bit-head-proximal end region (14a; 114a) was displaced, by wear, along the receptacle axis (22; 122) with reference to its location in the original unworn state.

4. An apparatus (40; 140; 240) for metal-cutting machining of wear-affected bit-head proximal end regions (14a; 114a) of bit holders (14; 114) of road milling machines, which apparatus is embodied for executing the overhauling method according to one of the preceding claims, the apparatus (40; 140; 240) comprising:
- a rotary actuator (42; 142; 242) having an output member (48; 148; 248) rotating around an actuator rotation axis (54; 154; 254);
- at least one material-removing tool (44; 144; 244), rotatable around a tool rotation axis (56; 156; 256), which is coupled or couplable to the output member (48; 148; 248) so as to rotate together;
- a positioning arbor (46; 146; 246), extending along an arbor axis (58; 158; 258), which is embodied for introduction into a bit receptacle opening (18; 118) of a bit holder (14; 114) and which comprises an abutment segment (60a; 160a; 260a), located radially remotely from the arbor axis (58; 158; 258) and facing away from the arbor axis (58; 158; 258) in a direction having a radial component, which is embodied for abutment against an inner wall (18a; 118a) of the bit receptacle opening (18; 118),
wherein a material-removing region, populated with cutting edges, of the material removing tool (44; 144; 244) is arranged between the positioning arbor (46; 146; 246) and the output member (48; 148; 248).

5. The apparatus (40; 140) according to Claim 4,
**characterized in that** the abutment segment (60a; 160a) embodied for abutment against the inner wall (18a; 118a) of the bit receptacle opening (18; 118) comprises a plurality of abutment sub-segments arranged with a spacing from one another in a circumferential direction around the arbor axis (58; 158), and preferably extends around the arbor axis (58; 158).

6. The apparatus (40; 140) according to Claim 4 or 5,
**characterized in that** the tool rotation axis (56; 156) is different from the arbor axis (58; 158), the tool rotation axis (56; 156) preferably being arranged parallel to the arbor axis (58; 158) and at a spacing therefrom.

7. The apparatus (40; 140) according to one of the preceding Claims 4 to 6, **characterized in that** the at least one material-removing tool (44; 144) is rotatable both around the tool rotation axis (56; 156) and around the arbor axis (58; 158).

8. The apparatus (40; 140) according to one of Claims 4 to 7,
**characterized in that** the positioning arbor (46; 146) is embodied in multiple parts, having at least one abutment component arrangement (60; 160), located radially farther outward with reference to the arbor axis (58; 158), which comprises the abutment segment (60a; 160a), and having an arbor core arrangement (62; 162) located radially farther inward, the abutment component arrangement (60; 160) and arbor core arrangement (62; 162) preferably being movable relative one another, in particular being rotatable around the arbor axis (58; 158) relative to one another.

9. The apparatus (40; 140; 240) according to one of the preceding Claims 4 to 8,
**characterized in that** the apparatus comprises a tool carrier (74; 174; 274) relative to which the at least one material-removing tool (44; 144; 244) is fastened rotatably around the tool rotation axis (56; 156; 256) but with a tool rotation axis (56; 156; 256) non-displaceable relative to the tool carrier (74; 174; 274), wherein in particular the tool carrier (74; 174) is coupled to the positioning arbor (46; 146) so as to move together, wherein in particular preferred the tool carrier (74; 174) is coupled to the arbor core arrangement (62; 162) of the positioning arbor (46; 146) so as to move together, and is rotatable around the arbor axis (58; 158) relative to the abutment component arrangement (60; 160).

10. The apparatus (140) according to one of the preceding Claims 4 to 9,
**characterized in that** the at least one material-removing tool (144) is arranged with a tool rotation axis (156) differing from the actuator rotation axis (154), a torque-transferring transmission (176) being provided between the output member (148) and the material-removing tool (144), wherein in particular a plurality of material-removing tools (144) are provided, each of which is rotatable around a tool rotation axis (156), the transmission (176) connecting each material-removing tool (144) of the plurality of material-removing tools (144) to the output member (148) in torque-transferring fashion, wherein in particular preferred the transmission (176) comprises a planetary gear set, the output member (148) being coupled in torque-transferring fashion to the sun gear (178), and each material-removing tool (144) of the plurality of material-removing tools (144) being coupled in torque-transferring fashion to a respective planet gear (188).

11. The apparatus (40; 140; 240) according to one of the preceding Claims 4 to 10,
**characterized in that** the actuator rotation axis (54; 154; 254) is arranged parallel to the tool rotation axis (156) and at a spacing therefrom, or is arranged collinearly with the tool rotation axis (56; 256), or/and
**characterized in that** it comprises a stop (66; 166) for limiting an advance motion occurring along the arbor axis (58; 158), the stop (66; 166) preferably being embodied on the positioning arbor (46; 146), in particular preferably at that longitudinal end of the positioning arbor (46; 146) which is located farther from the material-removing tool (44; 144).

12. The apparatus (240) according to one of Claims 4, 5, or 7 to 11,
**characterized in that** the tool rotation axis (256) is collinear with the arbor axis (258), in particular the positioning arbor (246) being embodied integrally with the material-removing tool (244), wherein in particular the apparatus comprises an alignment surface (294), orthogonal to the tool rotation axis (256), that is embodied for abutment against a front surface (20"; 120"), enclosing a bit introduction orifice of the bit receptacle opening (18; 118), of the bit holder (14; 114).

13. An overhauling assemblage, comprising an apparatus (40; 140; 240) according to one of the preceding Claims 4 to 12 and further comprising a bit holder (14; 114), in particular a quick-change bit holder (114), of a road milling machine, having a bit receptacle opening (18; 118) extending along a receptacle axis (22; 122) into, preferably through, the bit holder (14; 114), wherein in particular the apparatus (40; 140; 240) is embodied in accordance with one of Claims 4 to 11 and implements the features of Claim 6, the arbor axis (58; 158) being arranged collinearly with the receptacle axis (22; 122) when the positioning arbor (46; 146) is introduced into the bit receptacle opening (18; 118), or wherein in particular the apparatus (240) is embodied in accordance with Claim 12, the arbor axis (258) being arranged parallel to the receptacle axis (122), at a spacing from the latter, when the positioning arbor (246) is introduced into the bit receptacle opening (118).

14. Use of an apparatus (40; 140; 240) according to one of Claims 4 to 12 for overhauling a wear-affected bit-head-proximal end region (14a; 114a) of a bit holder (14; 114), in particular a quick-change bit holder (114), of a road milling machine, having a bit receptacle opening (18; 118) extending along a receptacle axis (22; 122) into, preferably through, the bit holder (14; 114).

15. The use according to Claim 14,
**characterized in that** the use comprises generating an end surface (20"; 120") that encloses a bit introduction orifice of the bit receptacle opening (18; 118) and has a predetermined end surface shape, in particular a flat end surface shape, or/and **characterized in that** the use comprises generating a bevel (26; 126), having a predetermined bevel shape, between an end face (20"; 120") enclosing a bit introduction orifice of the bit receptacle opening (18; 118) and an inner wall (18a; 118a) of the bit receptacle opening (18; 118).

## Revendications

1. Procédé pour la remise en état d'un tambour de fraisage (15) d'une fraiseuse routière avec une pluralité de porte-pics (14 ; 114) qui sont respectivement adaptés pour recevoir dans une ouverture de réception de pic (18 ; 118) qui s'étend le long d'un axe de réception (22 ; 122) une tige de pic de fraisage, s'étendant le long d'un axe de tige, d'un pic de fraisage comprenant la tige de pic de fraisage et une tête de pic associée à celui-ci avec une pointe de pic, où au moins une partie des porte-pics (14 ; 114) comprennent respectivement une région d'extrémité (14a ; 114a) usée plus proche de la tête de pic entourant une section d'extrémité de l'ouverture de réception de pic (18 ; 118) plus proche de la tête de pic et comprenant une surface d'extrémité (20, 20', 20" ; 120, 120', 120") face à la tête de pic pendant l'opération de fraisage, le procédé comprenant les étapes suivantes:
- déterminer un état d'usure du tambour de fraisage (15) relatif au porte-pic, et
- mettre à disposition le tambour de fraisage (15) avec des supports de pics (14 ; 114) dont la surface d'extrémité (20, 20', 20" ; 120, 120', 120") face à la tête de pic pendant l'opération de fraisage, comparée à l'état non usé des porte-pics (14 ; 114) à la même position de porte-pic avant le début de l'opération de fraisage causant l'usure est déplacé le long de l'axe de réception (22 ; 122) en fonction de l'état d'usure déterminé,
**caractérisé en ce que** la mise à disposition du tambour de fraisage (15) avec des porte-pics (14 ; 114) avec des surfaces d'extrémité (20" ; 120") déplacées le long de l'axe de réception comprend un usinage par enlèvement de copeaux aux régions d'extrémité (14a ; 114a) plus proches de la tête de pic des porte-pics (14 ; 114) avec des surfaces d'extrémité (20" ; 120") déplacées le long de l'axe de réception.

2. Procédé selon la revendication 1,
**caractérisé en ce que** l'usinage par enlèvement de copeaux de la surface d'extrémité (20, 20', 20" ; 120, 120', 120") face à la tête de pic pendant l'opération de fraisage de la région d'extrémité plus proche de la tête de pic (14a ; 114a) usée est réalisé le long de l'axe de réception (22 ; 122), ou/et **caractérisé en ce que**
l'usinage par enlèvement de copeaux de porte-pics (14 ; 114) est réalisé quand ceux-ci sont connectés à un corps de base de tambour de fraisage (13) du tambour de fraisage (15).

3. Procédé selon une des revendications précédentes,
**caractérisé en ce que** la détermination de l'état d'usure relatif au porte-pic comprend une détermination du porte-pic (14 ; 114) ou d'un groupe de porte-pics (14 ; 114) avec une région d'extrémité plus proche de la tête de pic (14a ; 114a) usée au maximum, où en particulier par l'usinage par enlèvement de copeaux de la région d'extrémité plus proche de la tête de pic (14a ; 114a) d'un porte-pic (14 ; 114) la surface d'extrémité (20, 20', 20" ; 120, 120', 120") de celui-ci par rapport à sa localisation dans l'état d'origine non-usée est déplacée le long de l'axe de réception (22 ; 122) au moins par la valeur par laquelle la surface d'extrémité (20, 20', 20" ; 120, 120', 120") du porte-pic (14 ; 114) avec la région d'extrémité plus proche de la tête de pic (14a ; 114a) usée au maximum par rapport à sa localisation dans l'état d'origine non-usée est déplacée le long de l'axe de réception (22 ; 122).

4. Dispositif (40 ; 140 ; 240) pour l'usinage par enlèvement de copeaux de régions d'extrémité plus proche de la tête de pic (14a ; 114a) soumises à usure de porte-pics (14 ; 114) de fraiseuses routières, le dispositif étant adaptés pour la réalisation du procédé de remise en état selon une des revendications précédentes, le dispositif (40 ; 140 ; 240) comprenant :
- un dispositif d'entraînement rotatif (42 ; 142 ; 242) avec un membre de sortie (48 ; 148 ; 248) tournant autour d'un axe d'entraînement rotatif (54 : 154 ; 254),
- au moins un outil d'enlèvement de copeaux (44 ; 144 ; 244) rotatif autour d'un axe rotatif d'outil (56 ; 156 ; 256) qui est accouplé ou peut être accouplé avec le membre de sortie (48 ; 148 ; 248) pour une rotation commune,
- un mandrin de positionnement (46 ; 146 ; 246) s'étendant le long d'un axe de mandrin (58 ; 158 ; 258) adapté pour l'insertion dans une ouverture de réception de pic (18 ; 118) d'un porte-pic (14 ; 114) et comprenant une section d'appui (60a ; 160a ; 260a) radialement éloignée de l'axe de mandrin (58 ; 158 ; 258) et orienté dans un sens avec un composant radial opposé à l'axe de mandrin (58 ; 158 ; 258), adaptée pour un appui à une paroi interne (18a ; 118a) de l'ouverture de réception de mandrin (18 ; 118),
où une région d'enlèvement de copeaux prévue de membres tranchants de l'outil d'enlèvement de copeaux (44 ; 144 ; 244) est arrangée entre le mandrin de positionnement (46 ; 146 ; 246) et le membre de sortie (48 ; 148 ; 248).

5. Dispositif (40 ; 140) selon la revendication 4,
**caractérisé en ce que** la section d'appui (60a ; 160a) adaptée pour un appui à la paroi interne (18a ; 118a) de l'ouverture de réception de mandrin (18 ; 118) comprend une pluralité de sections partielles d'appui espacées dans le sens circonférentiel autour de l'axe de mandrin (58 ; 158), de préférence entourant l'axe de mandrin (58 ; 158).

6. Dispositif (40 ; 140) selon les revendications 4 ou 5,
**caractérisé en ce que** l'axe rotatif d'outil (56 ; 156) est différent de l'axe de mandrin (58 ; 158), l'axe rotatif d'outil (56 ; 156) étant de préférence parallèle à l'axe de mandrin (58 ; 158) et arrangé de manière espacée a celui-ci.

7. Dispositif (40 ; 140) selon une des revendications précédentes 4 à 6,
**caractérisé en ce que** ledit au moins un outil d'enlèvement de copeaux (44 ; 144) est rotatif autour de l'axe rotatif d'outil (56 ; 156) ainsi qu'autour de l'axe de mandrin (58 ; 158).

8. Dispositif (40 ; 140) selon une des revendications précédentes 4 à 7,
**caractérisé en ce que** le mandrin de positionnement (46 ; 146) est adapté en plusieurs pièces, avec un arrangement de composants d'appui (60 ; 160) situé radialement plus vers l'extérieur par rapport à l'axe de mandrin (58 ; 158), comprenant la section d'appui (60a ; 160a) et avec au moins un arrangement de coeur de mandrin (62 ; 162) situé radialement plus vers l'intérieur, l'arrangement de composants d'appui (60 ; 160) et l'arrangement de coeur de mandrin (62 ; 162) étant de préférence mobile l'un par rapport à l'autre, et étant en particulier rotatifs autour de l'axe de mandrin (58 ; 158) l'un par rapport à l'autre.

9. Dispositif (40 ; 140 ; 240) selon une des revendications précédentes 4 à 8,
**caractérisé en ce que** le dispositif comprend un porte-outil (74 ; 174 ; 274) par rapport auquel ledit au moins un outil d'enlèvement de copeaux (44 ; 144 ; 244) est attaché de manière rotative autour de l'axe rotatif d'outil (56 ; 156 ; 256) mais avec un axe rotatif d'outil (56 ; 156 ; 256) non déplaçable par rapport au porte-outil (74 ; 174 ; 274), où en particulier le porte-outil (74 ; 174) est accouplé au mandrin de positionnement (46 ; 146) pour un mouvement commun, où de manière particulièrement préférée le porte-outil (74 ; 174) est accouplé à l'arrangement de coeur de mandrin (62 ; 162) du mandrin de positionnement (46 ; 146) pour un mouvement commun et est rotatif autour de l'axe de mandrin (58 ; 158) par rapport à l'arrangement de composants d'appui (60 ; 160).

10. Dispositif (140) selon une des revendications précédentes 4 à 9,
**caractérisé en ce que** ledit au moins un outil d'enlèvement de copeaux (144) est arrangé avec un axe rotatif d'outil (156) différent de l'axe d'entraînement (154), où une transmission de couple (176) est prévue entre le membre de sortie (148) et l'outil d'enlèvement de copeaux (144), où en particulier une pluralité d'outils d'enlèvement de copeaux (144) est prévue, dont chacun est rotatif autour d'un axe rotatif d'outil (156), où la transmission (176) connecte chaque outil d'enlèvement de copeaux (144) de la pluralité d'outils d'enlèvement de copeaux (144) avec le membre de sortie (148) en transmettant un couple, où de manière particulièrement préférée la transmission (176) comprend un engrenage planétaire, ou le membre de sortie (148) est accouplé à la roue solaire (178) et où chaque outil d'enlèvement de copeaux (144) de la pluralité d'outils d'enlèvement de copeaux (144) est accouplé respectivement à un engrenage planétaire (188) transmettant un couple.

11. Dispositif (40 ; 140 ; 240) selon une des revendications précédentes 4 à 10,
**caractérisé en ce que** l'axe rotatif d'entraînement (54 ; 154 ; 254) est parallèle à l'axe rotatif d'outil (156) et est arrangé de manière espacé à celui-ci ou est arrangé de manière colinéaire à l'axe rotatif d'outil (56 ; 256) ou/et **caractérisé en ce qu'**il comprend un arrêt (66 ; 166) pour limiter un mouvement d'approche le long de l'axe de mandrin (58 ; 158), l'arrêt (66 ; 166) étant de préférence adapté au mandrin de positionnement (46 ; 146), de maniéré particulièrement préférée à l'extrémité longitudinale du mandrin de positionnement (46 ; 146) plus éloignée de l'outil d'enlèvement de copeaux (44 ; 144).

12. Dispositif (240) selon une des revendications 4, 5 ou 7 à 11,
**caractérisé en ce que** l'axe rotatif d'outil (256) est colinéaire à l'axe de mandrin (258), où en particulier le mandrin de positionnement (246) est adapté intégralement avec l'outil d'enlèvement de copeaux (244), où en particulier le dispositif comprend une surface d'orientation (294) orthogonale à l'axe rotatif d'outil (256) adaptée pour un appui contre une surface frontale (20" ; 120") du porte-pic (14 ; 114) entourant une ouverture d'introduction de pic de l'ouverture de réception de pic (18 ; 118).

13. Composant de remise en état, comprenant un dispositif (40 ; 140 ; 240) selon une des revendications précédentes 4 a 12 et comprenant en outre un porte-pic (14 ; 114), en particulier un porte- pic interchangeable (114), d'une fraiseuse routière avec une ouverture de réception de pic (18 ; 118) s'étendant dans le porte-pic (14 ; 114) le long d'un axe de réception (22 ; 122), passant de préférence à travers de celui-ci, où en particulier le dispositif (40 ; 140 ; 240) selon une des revendications 4 à 11 est adapté en réalisant les aspects de la revendication 6, l'axe de mandrin (58 ; 158) étant arrangé de manière colinéaire à l'axe de réception (22 ; 122) quand le mandrin de positionnement (46 ; 146) est introduit dans l'ouverture de réception de pic (18 ; 118), ou où en particulier le dispositif (240) est adapté selon la revendication 12, l'axe de mandrin (258) étant parallèle à l'axe de réception (122) de manière espacée quand le mandrin de positionnement (246) est introduit dans l'ouverture de réception de pic (118).

14. Utilisation d'un dispositif (40 ; 140 ; 240) selon une des revendications 4 à 12 pour la remise en état d'une région d'extrémité plus proche de la tête de pic (14a ; 114a) soumise à usure d'un porte-pics (14 ; 114), en particulier d'un porte-pics interchangeable (114) d'une fraiseuse routière avec une ouverture de réception de pic (18 ; 118) s'étendant dans le porte-pic (14 ; 114) le long d'un axe de réception (22 ; 122), et passant de préférence à travers de celui-ci.

15. Utilisation selon la revendication 14,
**caractérisé en ce que** l'utilisation comprend la réalisation d'une surface d'extrémité (20", 120") entourant une ouverture d'introduction de pic de l'ouverture de réception de pic (18 ; 118) avec une forme de surface d'extrémité prédéterminée, en particulier une forme de surface d'extrémité plane, ou/et
**caractérisé en ce que** l'utilisation comprend la réalisation d'un chanfrein (26 ; 126) entre une surface d'extrémité (20", 120") entourant une ouverture d'introduction de pic de l'ouverture de réception de pic (18 ; 118) et une paroi interne (18a ; 118a) de l'ouverture de réception de pic (18 ; 118) avec une forme de chanfrein prédéterminée.
